# EUROPEAN PATENT APPLICATION

(11) **EP 4 848 669 A1**
(43) Date of publication of application: **02.12.2026**
(21) Application number: 25751054.5
(22) Date of filing: 08.01.2025
(51) Int. Cl.: H04L 12/46

(54) **NETWORK INTERCONNECTING METHOD AND APPARATUS, AND COMMUNICATION SYSTEM**

(30) Priority: 08.02.2024 CN 202410178124
(71) Applicant: Huawei Technologies Co., Ltd., Shenzhen, Guangdong 518129 (CN)
(72) Inventor: ZHUANG, Shunwan, Shenzhen, Guangdong 518129 (CN); PANG, Donglei, Shenzhen, Guangdong 518129 (CN); SHENG, Cheng, Shenzhen, Guangdong 518129 (CN); WANG, Haibo, Shenzhen, Guangdong 518129 (CN); DIAO, Cao, Shenzhen, Guangdong 518129 (CN)
(74) Representative: Huawei European IPR
(86) International application number: PCT/CN2025/071344
(87) International publication number: WO 2025/167452

(57) **Abstract**

A network interconnection method and apparatus, and a communication system are provided, relating to the field of communication technologies. In this application, a first tunnel identifier identifies a first tunnel from a first communication apparatus to a second communication apparatus, a head node of the first tunnel is the first communication apparatus, and a tail node of the first tunnel is the second communication apparatus. The first communication apparatus may send the first tunnel identifier to a third communication apparatus, and the third communication apparatus may receive the first tunnel identifier, and establish an end-to-end tunnel from the third communication apparatus to the second communication apparatus based on the first tunnel identifier, where the end-to-end tunnel includes the first tunnel and a second tunnel, a head node of the second tunnel is the third communication apparatus, and a tail node of the second tunnel is the first communication apparatus. Therefore, in this application, the third communication apparatus establishes the end-to-end tunnel from the third communication apparatus to the second communication apparatus.

## Description

This application claims priority to Chinese Patent Application No. 202410178124.2, filed on February 8, 2024, and entitled "NETWORK INTERCONNECTION METHOD AND APPARATUS, AND COMMUNICATION SYSTEM", which is incorporated herein by reference in its entirety.

### TECHNICAL FIELD

This application relates to the field of communication technologies, and in particular, to a network interconnection method and apparatus, and a communication system.

### BACKGROUND

In the communication field, a network managed by an administrator may be referred to as an administrative domain, networks managed by different administrators are different administrative domains, and different administrative domains may be interconnected for communication.

Currently, in a scenario in which different administrative domains are interconnected, a network node in an administrative domain cannot obtain a network topology in another administrative domain across administrative domains. As a result, a network node in an administrative domain cannot plan an end-to-end tunnel to a network node in another administrative domain.

### SUMMARY

This application provides a network interconnection method and apparatus, and a communication system. Technical solutions of this application are as follows:

According to a first aspect, a network interconnection method is provided. The method includes: receiving a first tunnel identifier, where the first tunnel identifier identifies a first tunnel from a first communication apparatus to a second communication apparatus, a head node of the first tunnel is the first communication apparatus, and a tail node of the first tunnel is the second communication apparatus; and establishing an end-to-end tunnel from a third communication apparatus to the second communication apparatus based on the first tunnel identifier, where the end-to-end tunnel includes the first tunnel and a second tunnel, a head node of the second tunnel is the third communication apparatus, and a tail node of the second tunnel is the first communication apparatus.

The method provided in the first aspect and the method provided in optional implementation solutions of the first aspect may be performed by the third communication apparatus.

According to the technical solution provided in this application, the third communication apparatus may receive the first tunnel identifier, and establish the end-to-end tunnel from the third communication apparatus to the second communication apparatus based on the first tunnel identifier. Therefore, the end-to-end tunnel from the third communication apparatus to the second communication apparatus is established.

Optionally, the third communication apparatus receives the first tunnel identifier sent by the first communication apparatus. The first communication apparatus may directly send the first tunnel identifier to the third communication apparatus, or may send the first tunnel identifier to the third communication apparatus through a controller.

In the technical solution provided in this application, because the first communication apparatus may notify the third communication apparatus of the first tunnel identifier, the first communication apparatus provides the third communication apparatus with the first tunnel from the first communication apparatus to the second communication apparatus.

Optionally, the establishing the end-to-end tunnel from the third communication apparatus to the second communication apparatus based on the first tunnel identifier includes: determining, based on the first tunnel identifier and performance information of the first tunnel, to establish the end-to-end tunnel from the third communication apparatus to the second communication apparatus based on the first tunnel. For example, the first tunnel is determined based on the performance information of the first tunnel and performance information of the third tunnel, and then the end-to-end tunnel is established based on the first tunnel identifier.

According to the technical solution provided in this application, the third communication apparatus determines, based on the first tunnel identifier and the performance information of the first tunnel, to establish the end-to-end tunnel from the third communication apparatus to the second communication apparatus based on the first tunnel, and then the third communication apparatus establishes the end-to-end tunnel from the third communication apparatus to the second communication apparatus based on the first tunnel, thereby ensuring performance of the end-to-end tunnel established by the third communication apparatus.

Optionally, the method further includes: receiving the performance information of the first tunnel.

According to the technical solution provided in this application, the third communication apparatus receives the performance information of the first tunnel, so that the third communication apparatus can determine, based on the first tunnel identifier and the performance information of the first tunnel, to establish the end-to-end tunnel from the third communication apparatus to the second communication apparatus based on the first tunnel.

Optionally, the third communication apparatus receives the performance information of the first tunnel sent by the first communication apparatus. The first communication apparatus may directly send the performance information of the first tunnel to the third communication apparatus, or may send the performance information of the first tunnel to the third communication apparatus through the controller.

Optionally, the performance information of the first tunnel includes at least one of available bandwidth, delay, jitter, or packet loss.

Optionally, the establishing the end-to-end tunnel from the third communication apparatus to the second communication apparatus based on the first tunnel identifier includes: establishing the end-to-end tunnel from the third communication apparatus to the second communication apparatus based on the first tunnel identifier and a second tunnel identifier, where the second tunnel identifier identifies the second tunnel. For example, the third communication apparatus establishes a tunnel forwarding entry based on the first tunnel identifier and the second tunnel identifier, to establish the end-to-end tunnel.

Optionally, the method further includes: receiving the second tunnel identifier.

According to the technical solution provided in this application, the third communication apparatus receives the second tunnel identifier, so that the third communication apparatus can establish the end-to-end tunnel from the third communication apparatus to the second communication apparatus based on the first tunnel identifier and the second tunnel identifier.

Optionally, the third communication apparatus receives the second tunnel identifier sent by the controller.

Optionally, the receiving the first tunnel identifier includes: receiving a plurality of tunnel identifiers, where the plurality of tunnel identifiers include the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus. After the third communication apparatus receives the plurality of tunnel identifiers, the third communication apparatus may determine the first tunnel in the first tunnel and the third tunnel. For example, the third communication apparatus determines the first tunnel based on the performance information of the first tunnel and the performance information of the third tunnel, and then establishes the end-to-end tunnel from the third communication apparatus to the second communication apparatus based on the first tunnel identifier that identifies the first tunnel. For example, the plurality of tunnel identifiers identify a plurality of tunnels from the first communication apparatus to the second communication apparatus, head nodes of the plurality of tunnels are all the first communication apparatus, tail nodes of the plurality of tunnels are all the second communication apparatus, and the third communication apparatus determines the first tunnel based on performance information of the plurality of tunnels.

According to the technical solution provided in this application, the third communication apparatus receives the plurality of tunnel identifiers, and the third communication apparatus performs screening on the tunnels identified by the plurality of tunnel identifiers to determine the first tunnel, so that the third communication apparatus performs screening on the plurality of tunnels from the first communication apparatus to the second communication apparatus.

Optionally, the method further includes: receiving a virtual private network (virtual private network, VPN) route, where a next hop address of the VPN route is an address of the second communication apparatus; and recursing the VPN route to the end-to-end tunnel based on the next hop address of the VPN route.

In the technical solution provided in this application, because the next hop address of the VPN route is the address of the second communication apparatus, and an address of a tail node of the end-to-end tunnel is the address of the second communication apparatus, that is, the next hop address of the VPN route matches the address of the tail node of the end-to-end tunnel, the third communication apparatus may recurse the VPN route to the end-to-end tunnel based on the next hop address of the VPN route.

Optionally, the receiving the first tunnel identifier includes: receiving a first route, where the first route includes the first tunnel identifier, an identifier of the head node of the first tunnel, and an identifier of the tail node of the first tunnel. The first route may further include the performance information of the first tunnel, the second tunnel identifier, and the like.

That is, the first communication apparatus or the controller sends the first tunnel identifier to the third communication apparatus by advertising a route.

Optionally, the first route includes any one of the following: a software-defined networking in a wide area network (software-defined networking in a wide area network, SD-WAN) route; a border gateway protocol link-state (border gateway protocol link-state, BGP-LS) route; a border gateway protocol (border gateway protocol, BGP) labeled route; a border gateway protocol flow specification (border gateway protocol flow specification, BGP FS) route; a border gateway protocol routing policy distribution (border gateway protocol routing policy distribution, BGP-RPD) route; an overlay management protocol (overlay management protocol, OMP) route; or a path computation element communication protocol (path computation element communication protocol, PCEP) route.

According to the technical solution provided in this application, the first communication apparatus or the controller sends the first tunnel identifier to the third communication apparatus by advertising any one of the SD-WAN route, the BGP-LS route, the BGP labeled route, the BGP FS route, the BGP-RPD route, the OMP route, or the PCEP route. Therefore, the technical solution provided in this application is applicable to a wide range of protocols and application scenarios.

Optionally, the first route is the BGP FS route, the OMP route, or the PCEP route, the first route includes a traffic control policy, and the traffic control policy includes the first tunnel identifier. For example, the traffic control policy includes a plurality of tunnel identifiers, and the plurality of tunnel identifiers include the first tunnel identifier.

Alternatively, the first route is the BGP-RPD route, the OMP route, or the PCEP route, the first route includes a routing control policy, and the routing control policy includes the first tunnel identifier. For example, the routing control policy includes a plurality of tunnel identifiers, and the plurality of tunnel identifiers include the first tunnel identifier.

Alternatively, the first route is the SD-WAN route or the BGP-LS route, the first route includes a multiprotocol reachable network layer reachability information (MP_REACH_NLRI) attribute, and the MP_REACH_NLRI attribute includes the first tunnel identifier. For example, the MP_REACH_NLRI attribute includes a plurality of tunnel identifiers, and the plurality of tunnel identifiers include the first tunnel identifier.

Alternatively, the first route is the BGP labeled route, the first route includes an MP_REACH_NLRI attribute or a border gateway protocol prefix segment identifier (border gateway protocol prefix segment identifier, BGP prefix-SID) attribute, and the MP_REACH_NLRI attribute or the BGP prefix-SID attribute includes the first tunnel identifier. For example, the MP_REACH_NLRI attribute or the BGP prefix-SID attribute includes a plurality of tunnel identifiers, and the plurality of tunnel identifiers include the first tunnel identifier.

Optionally, the BGP labeled route includes any one of a BGP labeled-unicast (labeled-unicast, LU) route, a BGP classful transport planes (classful transport planes, CT) route, or a BGP color-aware routing (color-aware routing, CAR) route.

Optionally, the first route is the BGP LU route or the BGP CT route, the first route includes the MP_REACH_NLRI attribute or the BGP prefix-SID attribute, and the MP_REACH_NLRI attribute or the BGP prefix-SID attribute includes the first tunnel identifier; or the first route is the BGP CAR route, the first route includes the MP_REACH_NLRI attribute, and the MP_REACH_NLRI attribute includes the first tunnel identifier.

Optionally, the first tunnel belongs to a first administrative domain, and the second tunnel belongs to a second administrative domain.

According to the technical solution provided in this application, because the first tunnel belongs to the first administrative domain, and the second tunnel belongs to the second administrative domain, the third communication apparatus in the second administrative domain may establish an end-to-end tunnel that is from the third communication apparatus to the second communication apparatus in the first administrative domain and that crosses administrative domains.

Optionally, the first tunnel includes any one of the following: a segment routing multiprotocol label switching (segment routing multiprotocol label switching, SR-MPLS) tunnel; a segment routing internet protocol version 6 (segment routing internet protocol version 6, SRv6) traffic engineering (traffic engineering, TE) tunnel; a generic routing encapsulation (generic routing encapsulation, GRE) tunnel; a multiprotocol label switching (multiprotocol label switching, MPLS) label distribution protocol (label distribution protocol, LDP) label switching path (label switching path, LSP) tunnel; a BGP LSP tunnel; or a resource reservation protocol traffic engineering (resource reservation protocol traffic engineering, RSVP-TE) LSP tunnel.

Optionally, the second tunnel includes an SD-WAN tunnel.

Optionally, the method further includes: sending a first packet to the second communication apparatus through the end-to-end tunnel, where the first packet includes the first tunnel identifier.

According to the technical solution provided in this application, because the third communication apparatus sends the first packet to the second communication apparatus through the end-to-end tunnel from the third communication apparatus to the second communication apparatus, end-to-end communication between the third communication apparatus and the second communication apparatus can be implemented.

According to a second aspect, a network interconnection method is provided. The method includes: obtaining a first tunnel identifier, where the first tunnel identifier identifies a first tunnel from a first communication apparatus to a second communication apparatus, a head node of the first tunnel is the first communication apparatus, and a tail node of the first tunnel is the second communication apparatus; and sending the first tunnel identifier to a third communication apparatus. Therefore, the third communication apparatus may establish an end-to-end tunnel from the third communication apparatus to the second communication apparatus based on the first tunnel identifier, where the end-to-end tunnel includes the first tunnel and a second tunnel, a head node of the second tunnel is the third communication apparatus, and a tail node of the second tunnel is the first communication apparatus.

The method provided in the second aspect and the method provided in optional implementation solutions of the second aspect may be performed by the first communication apparatus or a controller. For ease of description, in the description of the second aspect, the first communication apparatus and the controller are collectively referred to as a target communication apparatus.

According to the technical solution provided in this application, because the target communication apparatus sends the first tunnel identifier to the third communication apparatus, the target communication apparatus (for example, the first communication apparatus) provides the third communication apparatus with the first tunnel from the first communication apparatus to the second communication apparatus, so that the third communication apparatus learns of the first tunnel. In this way, the third communication apparatus establishes the end-to-end tunnel from the third communication apparatus to the second communication apparatus based on the first tunnel identifier.

Optionally, the method further includes: sending performance information of the first tunnel to the third communication apparatus.

According to the technical solution provided in this application, the target communication apparatus sends the performance information of the first tunnel to the third communication apparatus, so that the third communication apparatus can determine, based on the first tunnel identifier and the performance information of the first tunnel, to establish the end-to-end tunnel from the third communication apparatus to the second communication apparatus based on the first tunnel, thereby ensuring performance of the end-to-end tunnel established by the third communication apparatus.

Optionally, the performance information of the first tunnel includes at least one of available bandwidth, delay, jitter, or packet loss.

Optionally, the method further includes: sending a second tunnel identifier to the third communication apparatus, where the second tunnel identifier identifies the second tunnel.

According to the technical solution provided in this application, the target communication apparatus sends the second tunnel identifier to the third communication apparatus, so that the third communication apparatus can establish the end-to-end tunnel from the third communication apparatus to the second communication apparatus based on the first tunnel identifier and the second tunnel identifier.

Optionally, the obtaining the first tunnel identifier includes: obtaining a plurality of tunnel identifiers, where the plurality of tunnel identifiers include the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus; determining the first tunnel based on the performance information of the first tunnel and performance information of the third tunnel; and obtaining the first tunnel identifier that identifies the first tunnel. For example, the plurality of tunnel identifiers identify a plurality of tunnels from the first communication apparatus to the second communication apparatus, head nodes of the plurality of tunnels are all the first communication apparatus, tail nodes of the plurality of tunnels are all the second communication apparatus, the target communication apparatus determines the first tunnel based on performance information of the plurality of tunnels, and then the target communication apparatus obtains the first tunnel identifier that identifies the first tunnel.

According to the technical solution provided in this application, the target communication apparatus performs screening on the tunnels identified by the plurality of tunnel identifiers to determine the first tunnel, so that the target communication apparatus (the first communication apparatus or the controller) performs screening on the plurality of tunnels from the first communication apparatus to the second communication apparatus.

Optionally, the obtaining the first tunnel identifier includes: obtaining a plurality of tunnel identifiers, where the plurality of tunnel identifiers include the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus; and correspondingly, the sending the first tunnel identifier to the third communication apparatus includes: sending the plurality of tunnel identifiers to the third communication apparatus. For example, the plurality of tunnel identifiers identify a plurality of tunnels from the first communication apparatus to the second communication apparatus, head nodes of the plurality of tunnels are all the first communication apparatus, and tail nodes of the plurality of tunnels are all the second communication apparatus.

According to the technical solution provided in this application, the target communication apparatus sends the plurality of tunnel identifiers to the third communication apparatus, and the third communication apparatus performs screening on the tunnels identified by the plurality of tunnel identifiers, so that the third communication apparatus performs screening on the plurality of tunnels from the first communication apparatus to the second communication apparatus.

Optionally, the sending the first tunnel identifier to the third communication apparatus includes: sending a first route to the third communication apparatus, where the first route includes the first tunnel identifier, an identifier of the head node of the first tunnel, and an identifier of the tail node of the first tunnel. The first route may further include the performance information of the first tunnel, the second tunnel identifier, and the like. That is, the target communication apparatus sends the first tunnel identifier, the performance information of the first tunnel, the second tunnel identifier, and the like to the third communication apparatus by advertising the first route.

Optionally, the first route includes any one of the following: an SD-WAN route; a BGP-LS route; a BGP labeled route; a BGP FS route; a BGP-RPD route; an OMP route; or a PCEP route.

According to the technical solution provided in this application, the target communication apparatus sends the first tunnel identifier to the third communication apparatus by advertising any one of the SD-WAN route, the BGP-LS route, the BGP labeled route, the BGP FS route, the BGP-RPD route, the OMP route, or the PCEP route. Therefore, the technical solution provided in this application is applicable to a wide range of protocols and application scenarios.

Optionally, the first route is the BGP FS route, the OMP route, or the PCEP route, the first route includes a traffic control policy, and the traffic control policy includes the first tunnel identifier. For example, the traffic control policy includes a plurality of tunnel identifiers, and the plurality of tunnel identifiers include the first tunnel identifier.

Alternatively, the first route is the BGP-RPD route, the OMP route, or the PCEP route, the first route includes a routing control policy, and the routing control policy includes the first tunnel identifier. For example, the routing control policy includes a plurality of tunnel identifiers, and the plurality of tunnel identifiers include the first tunnel identifier.

Alternatively, the first route is the SD-WAN route or the BGP-LS route, the first route includes a multiprotocol reachable network layer reachability information (MP_REACH_NLRI) attribute, and the MP_REACH_NLRI attribute includes the first tunnel identifier. For example, the MP_REACH_NLRI attribute includes a plurality of tunnel identifiers, and the plurality of tunnel identifiers include the first tunnel identifier.

Alternatively, the first route is the BGP labeled route, the first route includes an MP_REACH_NLRI attribute or a border gateway protocol prefix segment identifier (border gateway protocol prefix segment identifier, BGP prefix-SID) attribute, and the MP_REACH_NLRI attribute or the BGP prefix-SID attribute includes the first tunnel identifier. For example, the MP_REACH_NLRI attribute or the BGP prefix-SID attribute includes a plurality of tunnel identifiers, and the plurality of tunnel identifiers include the first tunnel identifier.

Optionally, the BGP labeled route includes any one of a BGP LU route, a BGP CT route, or a BGP CAR route.

Optionally, the first route is the BGP LU route or the BGP CT route, the first route includes the MP_REACH_NLRI attribute or the BGP prefix-SID attribute, and the MP_REACH_NLRI attribute or the BGP prefix-SID attribute includes the first tunnel identifier; or the first route is the BGP CAR route, the first route includes the MP_REACH_NLRI attribute, and the MP_REACH_NLRI attribute includes the first tunnel identifier.

Optionally, the method further includes: receiving a VPN route, where a next hop address of the VPN route is an address of the second communication apparatus; and sending the VPN route to the third communication apparatus. In a process of sending the VPN route to the third communication apparatus, the target communication apparatus does not change the next hop address of the VPN route, that is, maintains the next hop address of the VPN route as the address of the second communication apparatus. In this way, after receiving the VPN route, the third communication apparatus may recurse the VPN route to the end-to-end tunnel based on the next hop address of the VPN route.

Optionally, the first tunnel belongs to a first administrative domain, and the second tunnel belongs to a second administrative domain.

According to the technical solution provided in this application, because the first tunnel belongs to the first administrative domain, and the second tunnel belongs to the second administrative domain, the third communication apparatus in the second administrative domain may establish an end-to-end tunnel that is from the third communication apparatus to the second communication apparatus in the first administrative domain and that crosses administrative domains.

Optionally, the first tunnel includes any one of the following: an SR-MPLS tunnel; an SRv6 TE tunnel; a GRE tunnel; an MPLS LDP LSP tunnel; a BGP LSP tunnel; or an RSVP-TE LSP tunnel.

Optionally, the second tunnel includes an SD-WAN tunnel.

Optionally, the method is performed by the first communication apparatus, that is, the target communication apparatus is the first communication apparatus. The method further includes: receiving a first packet, where the first packet includes the first tunnel identifier; and forwarding the first packet to the second communication apparatus based on the first tunnel identifier. For example, the first communication apparatus determines the first tunnel based on the first tunnel identifier in the first packet, and then forwards the first packet to the second communication apparatus through the first tunnel.

According to a third aspect, a communication apparatus is provided. The communication apparatus includes at least one functional module, and the at least one functional module is configured to perform the method provided in any one of the first aspect or the optional manners of the first aspect. The at least one functional module may be implemented based on software, hardware, or a combination of software and hardware, and the at least one functional module may be randomly combined or divided based on a specific implementation.

Optionally, the communication apparatus is a third communication apparatus, and the at least one functional module includes a receiving module and a processing module.

The receiving module is configured to receive a first tunnel identifier, where the first tunnel identifier identifies a first tunnel from a first communication apparatus to a second communication apparatus, a head node of the first tunnel is the first communication apparatus, and a tail node of the first tunnel is the second communication apparatus.

The processing module is configured to establish an end-to-end tunnel from the third communication apparatus to the second communication apparatus based on the first tunnel identifier, where the end-to-end tunnel includes the first tunnel and a second tunnel, a head node of the second tunnel is the third communication apparatus, and a tail node of the second tunnel is the first communication apparatus.

Optionally, the receiving module is configured to receive the first tunnel identifier sent by the first communication apparatus. The first communication apparatus may directly send the first tunnel identifier to the third communication apparatus, or may send the first tunnel identifier to the third communication apparatus through a controller.

Optionally, the processing module is configured to determine, based on the first tunnel identifier and performance information of the first tunnel, to establish the end-to-end tunnel from the third communication apparatus to the second communication apparatus based on the first tunnel.

Optionally, the receiving module is further configured to receive the performance information of the first tunnel.

Optionally, the receiving module is configured to receive the performance information of the first tunnel sent by the first communication apparatus. The first communication apparatus may directly send the performance information of the first tunnel to the third communication apparatus, or may send the performance information of the first tunnel to the third communication apparatus through the controller.

Optionally, the performance information of the first tunnel includes at least one of available bandwidth, delay, jitter, or packet loss.

Optionally, the processing module is configured to establish the end-to-end tunnel from the third communication apparatus to the second communication apparatus based on the first tunnel identifier and a second tunnel identifier, where the second tunnel identifier identifies the second tunnel.

Optionally, the receiving module is further configured to receive the second tunnel identifier.

Optionally, the receiving module is configured to receive the second tunnel identifier sent by the controller.

Optionally, the receiving module is configured to receive a plurality of tunnel identifiers, where the plurality of tunnel identifiers include the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus.

Optionally, the receiving module is further configured to receive a VPN route, where a next hop address of the VPN route is an address of the second communication apparatus.

The processing module is further configured to recurse the VPN route to the end-to-end tunnel based on the next hop address of the VPN route.

Optionally, the receiving module is configured to receive a first route, where the first route includes the first tunnel identifier, an identifier of the head node of the first tunnel, and an identifier of the tail node of the first tunnel. The first route may further include the performance information of the first tunnel, the second tunnel identifier, and the like.

Optionally, the first route includes any one of the following: an SD-WAN route; a BGP-LS route; a BGP labeled route; a BGP FS route; a BGP-RPD route; an OMP route; or a PCEP route.

Optionally, the first route is the BGP FS route, the OMP route, or the PCEP route, the first route includes a traffic control policy, and the traffic control policy includes the first tunnel identifier; or the first route is the BGP-RPD route, the OMP route, or the PCEP route, the first route includes a routing control policy, and the routing control policy includes the first tunnel identifier; or the first route is the SD-WAN route or the BGP-LS route, the first route includes an MP_REACH_NLRI attribute, and the MP_REACH_NLRI attribute includes the first tunnel identifier; or the first route is the BGP labeled route, the first route includes an MP_REACH_NLRI attribute or a BGP prefix-SID attribute, and the MP_REACH_NLRI attribute or the BGP prefix-SID attribute includes the first tunnel identifier.

Optionally, the BGP labeled route includes any one of a BGP LU route, a BGP CT route, or a BGP CAR route.

Optionally, the first route is the BGP LU route or the BGP CT route, the first route includes the MP_REACH_NLRI attribute or the BGP prefix-SID attribute, and the MP_REACH_NLRI attribute or the BGP prefix-SID attribute includes the first tunnel identifier; or the first route is the BGP CAR route, the first route includes the MP_REACH_NLRI attribute, and the MP_REACH_NLRI attribute includes the first tunnel identifier.

Optionally, the first tunnel belongs to a first administrative domain, and the second tunnel belongs to a second administrative domain.

Optionally, the first tunnel includes any one of the following: an SR-MPLS tunnel; an SRv6 TE tunnel; a GRE tunnel; an MPLS LDP LSP tunnel; a BGP LSP tunnel; or an RSVP-TE LSP tunnel.

Optionally, the second tunnel includes an SD-WAN tunnel.

Optionally, the at least one functional module further includes a sending module, configured to send a first packet to the second communication apparatus through the end-to-end tunnel, where the first packet includes the first tunnel identifier.

According to a fourth aspect, a communication apparatus is provided. The communication apparatus includes at least one functional module, and the at least one functional module is configured to perform the method provided in any one of the second aspect or the optional manners of the second aspect. The at least one functional module may be implemented based on software, hardware, or a combination of software and hardware, and the at least one functional module may be randomly combined or divided based on a specific implementation.

Optionally, the communication apparatus is a first communication apparatus or a controller. For ease of description, the first communication apparatus and the controller are collectively referred to as a target communication apparatus, and the at least one functional module includes a processing module and a sending module.

The processing module is configured to obtain a first tunnel identifier, where the first tunnel identifier identifies a first tunnel from the first communication apparatus to a second communication apparatus, a head node of the first tunnel is the first communication apparatus, and a tail node of the first tunnel is the second communication apparatus.

The sending module is configured to send the first tunnel identifier to a third communication apparatus, so that the third communication apparatus establishes an end-to-end tunnel from the third communication apparatus to the second communication apparatus based on the first tunnel identifier, where the end-to-end tunnel includes the first tunnel and a second tunnel, a head node of the second tunnel is the third communication apparatus, and a tail node of the second tunnel is the first communication apparatus.

Optionally, the sending module is further configured to send performance information of the first tunnel to the third communication apparatus.

Optionally, the performance information of the first tunnel includes at least one of available bandwidth, delay, jitter, or packet loss.

Optionally, the sending module is further configured to send a second tunnel identifier to the third communication apparatus, where the second tunnel identifier identifies the second tunnel.

Optionally, the processing module is configured to: obtain a plurality of tunnel identifiers, where the plurality of tunnel identifiers include the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus; determine the first tunnel based on the performance information of the first tunnel and performance information of the third tunnel; and obtain the first tunnel identifier that identifies the first tunnel.

Optionally, the processing module is configured to obtain a plurality of tunnel identifiers, where the plurality of tunnel identifiers include the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus; and correspondingly, the sending module is configured to send the plurality of tunnel identifiers to the third communication apparatus.

Optionally, the sending module is configured to send a first route to the third communication apparatus, where the first route includes the first tunnel identifier, an identifier of the head node of the first tunnel, and an identifier of the tail node of the first tunnel. The first route may further include the performance information of the first tunnel, the second tunnel identifier, and the like.

Optionally, the first route includes any one of the following: an SD-WAN route; a BGP-LS route; a BGP labeled route; a BGP FS route; a BGP-RPD route; an OMP route; or a PCEP route.

Optionally, the first route is the BGP FS route, the OMP route, or the PCEP route, the first route includes a traffic control policy, and the traffic control policy includes the first tunnel identifier; or the first route is the BGP-RPD route, the OMP route, or the PCEP route, the first route includes a routing control policy, and the routing control policy includes the first tunnel identifier; or the first route is the SD-WAN route or the BGP-LS route, the first route includes an MP_REACH_NLRI attribute, and the MP_REACH_NLRI attribute includes the first tunnel identifier; or the first route is the BGP labeled route, the first route includes an MP_REACH_NLRI attribute or a BGP prefix-SID attribute, and the MP_REACH_NLRI attribute or the BGP prefix-SID attribute includes the first tunnel identifier.

Optionally, the BGP labeled route includes any one of a BGP LU route, a BGP CT route, or a BGP CAR route.

Optionally, the first route is the BGP LU route or the BGP CT route, the first route includes the MP_REACH_NLRI attribute or the BGP prefix-SID attribute, and the MP_REACH_NLRI attribute or the BGP prefix-SID attribute includes the first tunnel identifier; or the first route is the BGP CAR route, the first route includes the MP_REACH_NLRI attribute, and the MP_REACH_NLRI attribute includes the first tunnel identifier.

Optionally, the at least one functional module further includes a receiving module, configured to receive a VPN route, where a next hop address of the VPN route is an address of the second communication apparatus; and the sending module is configured to send the VPN route to the third communication apparatus.

Optionally, the first tunnel belongs to a first administrative domain, and the second tunnel belongs to a second administrative domain.

Optionally, the first tunnel includes any one of the following: an SR-MPLS tunnel; an SRv6 TE tunnel; a GRE tunnel; an MPLS LDP LSP tunnel; a BGP LSP tunnel; or an RSVP-TE LSP tunnel.

Optionally, the second tunnel includes an SD-WAN tunnel.

Optionally, the target communication apparatus is the first communication apparatus, and the at least one functional module further includes a receiving module, configured to receive a first packet, where the first packet includes the first tunnel identifier; and the sending module is further configured to forward the first packet to the second communication apparatus based on the first tunnel identifier.

According to a fifth aspect, a communication apparatus is provided, including a memory and a processor. The memory is configured to store a computer program, and the processor is configured to execute the computer program stored in the memory to implement the method provided in any one of the first aspect or the optional manners of the first aspect, or the method provided in any one of the second aspect or the optional manners of the second aspect.

According to a sixth aspect, a communication apparatus is provided, including a main control board and an interface board. The main control board and the interface board are configured to implement the method provided in any one of the first aspect or the optional manners of the first aspect, or the method provided in any one of the second aspect or the optional manners of the second aspect.

According to a seventh aspect, a communication system is provided, including a plurality of communication apparatuses. At least one of the plurality of communication apparatuses is configured to perform the method provided in any one of the first aspect or the optional manners of the first aspect, or the method provided in any one of the second aspect or the optional manners of the second aspect. The at least one of the plurality of communication apparatuses is the communication apparatus provided in any one of the third aspect or the optional manners of the third aspect, or the communication apparatus provided in any one of the fourth aspect or the optional manners of the fourth aspect, or the communication apparatus provided in the fifth aspect or the sixth aspect.

Optionally, the plurality of communication apparatuses include a first communication apparatus, a second communication apparatus, a third communication apparatus, and a controller. The third communication apparatus is configured to perform the method provided in any one of the first aspect or the optional manners of the first aspect. The first communication apparatus or the controller is configured to perform the method provided in any one of the second aspect or the optional manners of the second aspect. The third communication apparatus is the communication apparatus provided in any one of the third aspect or the optional manners of the third aspect, or the communication apparatus provided in the fifth aspect or the sixth aspect. The first communication apparatus or the controller is the communication apparatus provided in any one of the fourth aspect or the optional manners of the fourth aspect, or the communication apparatus provided in the fifth aspect or the sixth aspect.

According to an eighth aspect, a computer-readable storage medium is provided. The computer-readable storage medium stores a computer program. When the computer program is executed by a processor, the method provided in any one of the first aspect or the optional manners of the first aspect, or the method provided in any one of the second aspect or the optional manners of the second aspect is implemented.

According to a ninth aspect, a computer program product is provided. The computer program product includes a program or code. When the program or the code is executed, the method provided in any one of the first aspect or the optional manners of the first aspect, or the method provided in any one of the second aspect or the optional manners of the second aspect is implemented.

The communication apparatus described in the first aspect to the ninth aspect may be a network node, for example, a router or a switch, or may be a communication entity in the network node, for example, a chip, an interface board, a line card, or a software-based communication apparatus. A form of the communication apparatus is not limited in this application. For example, the communication apparatus is a chip, the chip includes a programmable logic circuit and/or program instructions, and when the chip runs, the method provided in any one of the first aspect or the optional manners of the first aspect, or the method provided in any one of the second aspect or the optional manners of the second aspect is implemented.

For technical effects of the third aspect to the ninth aspect, refer to the technical effects of the first aspect and the second aspect. Details are not described herein again.

### BRIEF DESCRIPTION OF DRAWINGS

FIG. 1 is a diagram of an MP_REACH_NLRI attribute provided by the multi-protocol extensions for border gateway protocol (multi-protocol extensions for border gateway protocol, MP-BGP);
FIG. 2 is a diagram of a multiprotocol unreachable network layer reachability information (MP_UNREACH_NLRI) attribute provided by MP-BGP;
FIG. 3 is a diagram of a network layer reachability information (network layer reachability information, NLRI) field provided by BGP SD-WAN;
FIG. 4 is a diagram of another NLRI field provided by BGP SD-WAN;
FIG. 5 is a diagram of a link-state NLRI (link-state NLRI, LS-NLRI) field;
FIG. 6 is a diagram of an application scenario according to an embodiment of this application;
FIG. 7 is a diagram of another application scenario according to an embodiment of this application;
FIG. 8 is a flowchart of a network interconnection method according to an embodiment of this application;
FIG. 9 is a diagram of a matching type-length-value (type-length-value, TLV) field in an OMP route or a PCEP route according to an embodiment of this application;
FIG. 10 is a diagram of an action TLV field in an OMP route or a PCEP route according to an embodiment of this application;
FIG. 11 is a diagram of an SD-WAN NLRI field according to an embodiment of this application;
FIG. 12 is a diagram of a BGP LU NLRI field according to an embodiment of this application;
FIG. 13 is a diagram of a BGP CT NLRI field according to an embodiment of this application;
FIG. 14 is a diagram of a BGP CAR NLRI field according to an embodiment of this application;
FIG. 15 is a diagram of another BGP CAR NLRI field according to an embodiment of this application;
FIG. 16 is a diagram of a BGP prefix-SID attribute according to an embodiment of this application;
FIG. 17 is a diagram of a BGP tunnel performance attribute according to an embodiment of this application;
FIG. 18 is a diagram of a metric sub-TLV field according to an embodiment of this application;
FIG. 19 is a diagram of a color (color) extended community attribute according to an embodiment of this application;
FIG. 20 is a diagram of a "transport class" route target extended community attribute according to an embodiment of this application;
FIG. 21 is a flowchart of another network interconnection method according to an embodiment of this application;
FIG. 22 is a flowchart of still another network interconnection method according to an embodiment of this application;
FIG. 23 is a diagram of a network interconnection method according to an embodiment of this application;
FIG. 24 is a diagram of another network interconnection method according to an embodiment of this application;
FIG. 25 is a diagram of still another network interconnection method according to an embodiment of this application;
FIG. 26 is a diagram of yet another network interconnection method according to an embodiment of this application;
FIG. 27 is a diagram of a communication apparatus according to an embodiment of this application;
FIG. 28 is a diagram of another communication apparatus according to an embodiment of this application; and
FIG. 29 is a diagram of still another communication apparatus according to an embodiment of this application.

### DESCRIPTION OF EMBODIMENTS

The following further describes in detail embodiments of this application with reference to accompanying drawings.

The technical solutions in embodiments of this application relate to the border gateway protocol (border gateway protocol, BGP), the BGP software-defined networking in a wide area network (software-defined networking in a wide area network, SD-WAN), the BGP flow specification (flow specification, FS), and the BGP link-state (BGP link-state, BGP-LS). To facilitate understanding of the technical solutions in embodiments of this application, before the technical solutions in embodiments of this application are described, BGP, the SD-WAN standard, BGP FS, and BGP-LS are first described.

### 1. BGP

BGP is a dynamic routing protocol used between autonomous systems (autonomous system, AS). BGP uses an address family (address family) to distinguish between different network layer protocols. As an external routing protocol standard of the internet (internet), BGP is widely used between internet service providers (internet service provider, ISP).

The three early versions of BGP are BGP-1 (request for comments (request for comments, RFC) 1105), BGP-2 (RFC 1163), and BGP-3 (RFC 1267), which are mainly used to exchange reachable routing information between ASs, construct a propagation path between ASs, prevent a routing loop, and apply some routing policies at an AS level. The current version of BGP is BGP-4 (RFC 4271).

Conventional BGP-4 can only manage internet protocol version 4 (internet protocol version 4, IPv4) unicast routing information, which presents some limitations for application of other network layer protocols such as internet protocol version 6 (internet protocol version 6, IPv6) routing information and multicast routing information. The Internet Engineering Task Force (Internet Engineering Task Force, IETF) extends BGP-4 to form the multi-protocol extensions for border gateway protocol (multi-protocol extensions for border gateway protocol, MP-BGP). MP-BGP can support a plurality of network layer protocols, thereby addressing the limitations of conventional BGP-4. The current MP-BGP standard is RFC 4760.

MP-BGP defines two BGP path attributes: an MP_REACH_NLRI attribute and an MP_UNREACH_NLRI attribute. The MP_REACH_NLRI attribute is a multiprotocol reachable network layer reachability information (network layer reachability information, NLRI) attribute, which is used to advertise a reachable route and next hop information. The MP_UNREACH_NLRI attribute is a multiprotocol unreachable NLRI attribute, which is used to withdraw an unreachable route. The two BGP path attributes enable BGP to be widely used for control signaling of various services.

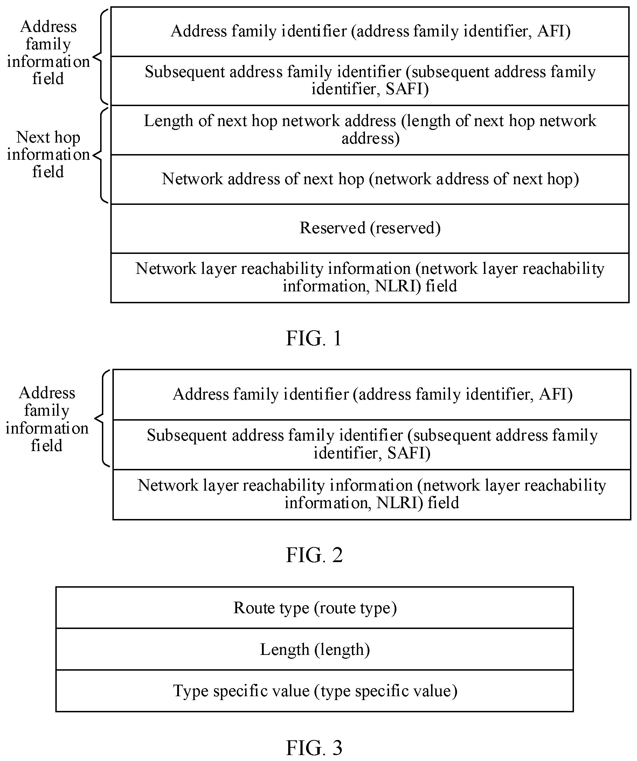

The MP_REACH_NLRI attribute consists of one or more triplets <address family information field, next hop information field, NLRI field>. FIG. 1 is a diagram of an MP_REACH_NLRI attribute according to the MP-BGP standard. As shown in FIG. 1, the MP_REACH_NLRI attribute includes an address family information field, a next hop information field, an NLRI field, and a reserved (reserved) field between the next hop information field and the NLRI field.

As shown in FIG. 1, the address family information (address family information) field includes an address family identifier (address family identifier, AFI) field and a subsequent address family identifier (subsequent address family Identifier, SAFI) field. A length of the AFI field is 2 octets (octets), and a length of the SAFI field is 1 octet. The AFI field identifies a network layer protocol, and the SAFI field identifies a type of a subsequent address family. Specifically, the AFI field is used to carry an AFI, and the AFI identifies the network layer protocol. The SAFI field is used to carry an SAFI, and the SAFI identifies the type of the subsequent address family. A value of the AFI field corresponds to an address family value defined by "Address Family Number" in RFC 1700. For example, when the value of the AFI field is 1, the AFI field identifies the IPv4 protocol. When the value of the AFI field is 2, the AFI field identifies the IPv6 protocol. When a value of the SAFI field is 1, the SAFI field identifies that the type of the subsequent address family is unicast. When the value of the SAFI field is 2, the SAFI field identifies that the type of the subsequent address family is multicast. When the value of the SAFI field is 4, the SAFI field identifies that the type of the subsequent address family is BGP. When the value of the SAFI field is 74, the SAFI field identifies that the type of the subsequent address family is SD-WAN. When the value of the SAFI field is 128, the SAFI field identifies that the type of the subsequent address family is a virtual private network (virtual private network, VPN). MP-BGP may identify, by using a combination of the value of the AFI field and the value of the SAFI field, a type of content carried in the NLRI field. For example, when the value of the AFI field is 1 and the value of the SAFI field is 1, it indicates that the NLRI field carries IPv4 unicast address family information. When the value of the AFI field is 1 and the value of the SAFI field is 128, it indicates that the NLRI field carries virtual private network version 4 (VPN version 4, VPNv4) address family information. When the value of the AFI field is 1 and the value of the SAFI field is 4, it indicates that the NLRI field carries IPv4 BGP address family information. When the value of the AFI field is 1 and the value of the SAFI field is 74, it indicates that the NLRI field carries IPv4 SD-WAN address family information. When the value of the AFI field is 2 and the value of the SAFI field is 74, it indicates that the NLRI field carries IPv6 SD-WAN address family information.

As shown in FIG. 1, the next hop information (next hop information) field includes a length of next hop network address (length of next hop network address) field and a network address of next hop (network address of next hop) field. A length of the length of next hop network address field is 1 octet, and a length of the network address of next hop field is variable. The length of next hop network address field indicates a length of the network address of next hop field, and the network address of next hop field is used to carry a next hop network address. The next hop network address is a network address of a next device on a path to a destination system. In some documents or technical documents, the next hop network address is also described as a next hop address.

As shown in FIG. 1, the NLRI field has a variable length. The NLRI field includes a reachable route list, the NLRI field includes one or more NLRI fields, each NLRI field consists of <length, NLRI value>, and the NLRI value is determined based on the combination of the value of the AFI field and the value of the SAFI field.

FIG. 2 is a diagram of an MP_UNREACH_NLRI attribute according to the MP-BGP standard. As shown in FIG. 2, the MP_UNREACH_NLRI attribute includes an address family information field and an NLRI field. The address family information field includes an AFI field and an SAFI field. Meanings of the AFI field and the SAFI field in the MP_UNREACH_NLRI attribute are the same as those of the MP_REACH_NLRI attribute. Details are not described herein again. In the MP_UNREACH_NLRI attribute, the NLRI field includes an unreachable route list, the NLRI field includes one or more NLRI fields, each NLRI field consists of <length, NLRI value>, and the NLRI value is determined based on the combination of the value of the AFI field and the value of the SAFI field. A BGP speaker (BGP speaker) may withdraw an unreachable route by adding same NLRI as the previously advertised MP_REACH_NLRI attribute to the MP_UNREACH_NLRI attribute. The BGP speaker is a network node (such as a router) that sends a BGP message.

### 2. BGP SD-WAN

For the currently defined BGP SD-WAN standard, refer to the following link:
https://www.ietf.org/archive/id/draft-ietf-idr-sdwan-edge-discovery-12.txt.

A format of an MP_REACH_NLRI attribute used in the BGP SD-WAN standard is shown in FIG. 1.

Definitions of a value of an AFI field and a value of an SAFI field in the BGP SD-WAN standard are shown in Table 1.

**Table 1**

| AFI | SAFI | Content carried in NLRI |
|---|---|---|
| 1 | 74 | IPv4 SD-WAN address family information |
| 2 | 74 | IPv6 SD-WAN address family information |

Refer to Table 1. In the BGP SD-WAN standard, the value of the AFI field includes 1 and 2, and the value of the SAFI field is 74. When the value of the AFI field is 1 and the value of the SAFI field is 74, it indicates that the NLRI field carries the IPv4 SD-WAN address family information. When the value of the AFI field is 2 and the value of the SAFI field is 74, it indicates that the NLRI field carries the IPv6 SD-WAN address family information.

FIG. 3 is a diagram of an NLRI field defined in the BGP SD-WAN standard. The NLRI field includes a route type (route type) subfield, a length (length) subfield, and a type specific value (type specific value) subfield. A length of the route type subfield and a length of the length subfield are both 2 octets, and a length of the type specific value subfield is variable. The route type subfield identifies a route type, the length subfield identifies the length of the type specific value subfield, and the type specific value subfield is used to carry a value of the route type.

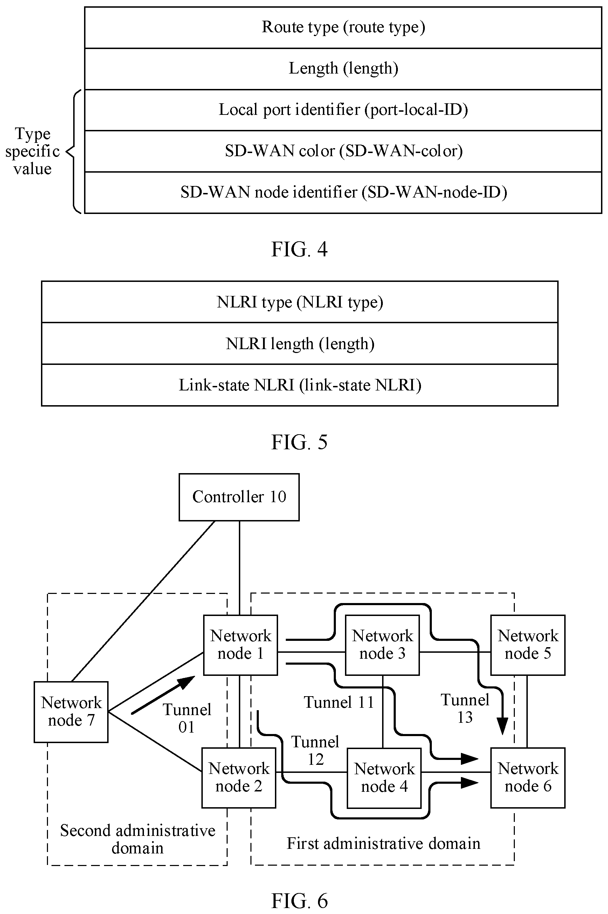

In the BGP SD-WAN standard, a value of the route type subfield in the NLRI field may be 1. FIG. 4 is a diagram of an NLRI field when the route type is 1 (that is, the value of the route type subfield is 1) defined in the BGP SD-WAN standard. As shown in FIG. 4, when the route type is 1, the type specific value subfield includes a local port identifier (port-local-ID) subfield, an SD-WAN color (SD-WAN-color) subfield, and an SD-WAN node identifier (SD-WAN-node-ID) subfield. A length of the port-local-ID subfield and a length of the SD-WAN-color subfield are both 4 octets, and a length of the SD-WAN-node-ID subfield is 4 octets or 16 octets. The port-local-ID subfield is used to carry an identifier of a local WAN port. The SD-WAN-color subfield is used to carry SD-WAN-color, and SD-WAN-color may identify a site. The SD-WAN-node-ID subfield is used to carry an identifier of an SD-WAN node. It should be noted that, when the route type is 1, the route is also referred to as an SD-WAN transport network port (transport network port, TNP) route.

### 3. BGP FS

BGP FS transfers traffic control policies to BGP FS peers by transiting BGP FS routes, to control attack traffic.

BGP FS includes two basic concepts: a BGP FS route and a BGP FS peer relationship.

The BGP FS route is a route defined in RFC 8955. BGP FS defines NLRI and an extended community attribute. The NLRI and the extended community attribute may carry a traffic matching rule and an action (that is, a traffic processing behavior) performed after traffic matching, to control attack traffic.

The BGP FS peer relationship is established between a device creating a BGP FS route and another device (for example, an ingress device of a network). After the device creating the BGP FS route establishes the BGP FS peer relationship with the another device, the device creating the BGP FS route and the another device are BGP FS peer relationships to each other. The another device may be referred to as a BGP FS peer of the device creating the BGP FS route. The device creating the BGP FS route may transit the BGP FS route to the BGP FS peer. After the BGP FS peer receives the BGP FS route, the BGP FS peer converts the BGP FS route into a traffic control policy on a forwarding plane, to control attack traffic.

BGP FS uses an MP_REACH_NLRI attribute and an MP_UNREACH_NLRI attribute defined in MP-BGP to carry NLRI. That is, the NLRI defined in BGP FS may be included in the MP_REACH_NLRI attribute and the MP_UNREACH_NLRI attribute defined in MP-BGP.

Values of an AFI field and values of an SAFI field that correspond to different types of BGP FS flow rules are shown in Table 2.

**Table 2**

| AFI | SAFI | Content carried in the NLRI |
|---|---|---|
| 1 | 133 | IPv4 flow rule |
| 1 | 134 | VPNv4 flow rule |
| 2 | 133 | IPv6 flow rule |
| 2 | 134 | VPNv6 flow rule |

Refer to Table 2. In BGP FS, the value of the AFI field includes 1 and 2, and the value of the SAFI field includes 133 and 134. When the value of the AFI field is 1 and the value of the SAFI field is 133, it indicates that the NLRI field carries the IPv4 flow rule. When the value of the AFI field is 1 and the value of the SAFI field is 134, it indicates that the NLRI field carries the VPNv4 flow rule. When the value of the AFI field is 2 and the value of the SAFI field is 133, it indicates that the NLRI field carries the IPv6 flow rule. When the value of the AFI field is 2 and the value of the SAFI field is 134, it indicates that the NLRI field carries the VPNv6 flow rule.

RFC 8955 defines 12 traffic matching rules: destination prefix (destination prefix), source prefix (source prefix), IP protocol (IP protocol), port (port), destination port (destination port), source port (source port), internet control message protocol (internet control message protocol, ICMP) type, ICMP code, transmission control protocol (transmission control protocol, TCP) flags, differentiated services code point (differentiated services code point, DSCP), and fragment (fragment) type. The 12 traffic matching rules are encapsulated in the NLRI of the BGP FS route for transition. The destination prefix is also referred to as a destination address, and the source prefix is also referred to as a source address. Herein, the "port" is specifically a port number, the "destination port" is a destination port number, and the "source port" is a source port number.

RFC 8955 defines four traffic processing behaviors: traffic drop, traffic rate limiting, modifying a DSCP value of a packet, and redirecting traffic to a VPN. The four traffic processing behaviors are encapsulated in the extended community attribute of the BGP FS route for transition.

### 4. BGP-LS

For the BGP-LS standard, refer to the following link: https://datatracker.ietf.org/doc/draft-ietf-idr-rfc7752bis/.

BGP-LS is a protocol used to collect a network topology. BGP-LS makes topology collection simpler and more efficient.

A BGP-LS route may be used to carry six types of routing information: node information, link information, IPv4 route prefix information, IPv6 route prefix information, segment routing internet protocol version 6 (segment routing internet protocol version 6, SRv6) segment identifier (segment identifier, SID) routing information, and traffic engineering (traffic engineering, TE) policy (policy) routing information.

Based on conventional BGP, BGP-LS further introduces a link-state NLRI (link-state NLRI, LS-NLRI) field to carry the foregoing six types of routing information. BGP-LS uses an MP_REACH_NLRI attribute and an MP_UNREACH_NLRI attribute as containers of the LS-NLRI field. That is, the LS-NLRI may be included in the MP_REACH_NLRI attribute or the MP_UNREACH_NLRI attribute.

For example, FIG. 5 is a diagram of an LS-NLRI field. The LS-NLRI field includes an NLRI type (NLRI type) subfield, an NLRI length (NLRI length) subfield, and a link-state NLRI subfield. A length of the NLRI type subfield and a length of the NLRI length subfield are both 2 octets, and a length of the link-state NLRI subfield is variable. The NLRI type subfield identifies an NLRI type, the NLRI length subfield identifies a length of the link-state NLRI subfield, and the link-state NLRI subfield is used to carry a value of the NLRI type. An SAFI value of a BGP-LS address family is 71. BGP-LS defines six types of LS-NLRI shown in Table 3.

**Table 3**

| NLRI type | link-state NLRI |
|---|---|
| 1 | Node NLRI (the link-state NLRI subfield carries the node information) |
| 2 | Link NLRI (the link-state NLRI subfield carries the link information) |
| 3 | IPv4 topology prefix NLRI (the link-state NLRI subfield carries the IPv4 route prefix information) |
| 4 | IPv6 topology prefix NLRI (the link-state NLRI subfield carries the IPv6 route prefix information) |
| 5 | SRv6 SID NLRI (the link-state NLRI subfield carries the SRv6 SID routing information) |
| 6 | TE policy NLRI (the link-state NLRI subfield carries the TE policy routing information) |

The foregoing merely briefly describes BGP, SD-WAN, BGP FS, and BGP-LS. For details about BGP, SD-WAN, BGP FS, and BGP-LS, refer to related standard documents. Details are not described herein.

The following describes the technical solutions in embodiments of this application. An application scenario of embodiments of this application is first described.

The application scenario of embodiments of this application includes at least two administrative domains, and the at least two administrative domains are interconnected. The at least two administrative domains are networks managed by at least two administrators, and the at least two administrative domains have different administrators. For example, the at least two administrative domains include a network 1 managed by an administrator 1 (for example, the network 1 is referred to as an administrative domain 1), a network 2 managed by an administrator 2 (for example, the network 2 is referred to as an administrative domain 2), and a network 3 managed by an administrator 3 (for example, the network 3 is referred to as an administrative domain 3). The administrator 1, the administrator 2, and the administrator 3 are different, and the administrative domain 1, the administrative domain 2, and the administrative domain 3 are different. In a specific embodiment, the administrator 1, the administrator 2, and the administrator 3 include an operator, an enterprise, a department in the enterprise, and the like, and the administrative domain 1, the administrative domain 2, and the administrative domain 3 include a network of the operator, a network of the enterprise, networks of different departments in the enterprise, and the like.

In an optional embodiment, one administrative domain is one AS domain, or one administrative domain includes a plurality of AS domains, or one administrative domain is a part of one AS domain. This is not limited in embodiments of this application.

The technical solutions in embodiments of this application relate to establishment of an end-to-end tunnel across administrative domains in a scenario in which at least two administrative domains are interconnected, and specifically, to establishing, by a network node (for example, an ingress node) in an administrative domain, an end-to-end tunnel from the network node to another network node (for example, an egress node) in another administrative domain. For example, the at least two administrative domains include a branch (branches) network and a backbone network. The technical solutions in embodiments of this application relate to establishing, by an ingress node of the branch network, an end-to-end tunnel from the ingress node to an egress node of the backbone network.

In embodiments of this application, the backbone network includes a self-built backbone network, a managed service provider (managed service provider, MSP) backbone network, and the like, and the branch network includes an SD-WAN branch network, a conventional branch network, and the like. This is not limited in embodiments of this application.

In embodiments of this application, each of the at least two administrative domains includes a plurality of network nodes. The network node may be a physical node or a logical node. The physical node may be a network device such as a switch or a router, or may be a communication entity such as a chip, an interface board, or a line card in the network device. For example, the network device includes an access router (access router, AR) and a network element (network element, NE) device. The logical node may be a functional module in the network device. For example, the logical node is a virtual switch or a virtual router created in the network device, and the virtual switch or the virtual router may be created in the network device based on a virtualization technology such as a virtual machine (virtual machine, VM) or a container. The administrative domain includes a network node located at an edge of the administrative domain, and the network node is also referred to as an edge node. The edge node of the administrative domain includes an ingress node and an egress node. The ingress node is used for traffic to flow into the administrative domain, and the egress node is used for traffic to flow out of the administrative domain. The at least two administrative domains may include a same edge node, that is, one network node may be simultaneously used as an edge node of the at least two administrative domains. For example, one network node may be an ingress node of one administrative domain and an egress node of another administrative domain. For example, an edge node of the backbone network includes a provider edge (provider edge, PE) node, and an edge node of the branch network includes a customer edge (customer edge, CE) node and a customer premises equipment (customer premises equipment, CPE). For example, an edge node of the conventional branch network includes a CE node, and an edge node of the SD-WAN branch network includes a CPE. Both the CE node and the CPE are used for a user equipment to access a network. The user equipment includes but is not limited to an industrial device, a user terminal, a home gateway, a base station, a host, a server, a virtual machine (virtual machine, VM) created in the server, and the like. The host may be a smartphone, a tablet computer, a desktop computer, an internet of things (internet of things, IoT) device, or the like.

In an optional embodiment, the application scenario of embodiments of this application further includes a controller and/or a route reflector (route reflector, RR), to perform route reflection between network nodes. The controller is further configured to perform service control and the like. This is not limited in embodiments of this application. The controller may be a functional module deployed in a server, or a server, or a server cluster including several servers, or a cloud computing service center. In some embodiments, the controller is also referred to as a control node, a manager, a network manager, a network controller, or the like.

FIG. 6 is a diagram of an application scenario according to an embodiment of this application. In FIG. 6, interconnection between two administrative domains is used as an example for description. As shown in FIG. 6, a first administrative domain includes network nodes 1 to 6, and a second administrative domain includes the network nodes 1 and 2 and a network node 7. The network nodes 1 and 2 and the network nodes 5 and 6 are edge nodes of the first administrative domain. The network nodes 1 and 2 and the network node 7 are edge nodes of the second administrative domain. The first administrative domain and the second administrative domain are interconnected through the network nodes 1 and 2. For example, the network node 7 is an ingress node of the second administrative domain, the network nodes 1 and 2 are egress nodes of the second administrative domain and ingress nodes of the first administrative domain, and the network nodes 5 and 6 are egress nodes of the first administrative domain.

In an optional embodiment, the first administrative domain is a backbone network, the second administrative domain is a branch network, and the network nodes 1 and 2 are simultaneously used as PE nodes of the first administrative domain and CE nodes of the second administrative domain. A network node connected to the branch network in the backbone network is generally referred to as a gateway (gateway, GW) node. Therefore, the network nodes 1 and 2 in the application scenario shown in FIG. 6 are both GW nodes. In a specific embodiment, the first administrative domain is a self-built backbone network or an MSP backbone network, and the second administrative domain is an SD-WAN branch network or a conventional branch network. This is not limited in embodiments of this application.

In an optional embodiment, as shown in FIG. 6, the application scenario further includes a controller 10. The controller 10 is separately connected to the network nodes 1 to 7 (for brevity, FIG. 6 shows only connection lines between the controller 10 and the network node 1 and between the controller 10 and the network node 7). The controller 10 may perform route reflection between the network nodes 1 to 7, the controller 10 may further control the network nodes 1 to 7 to perform service forwarding, and the like.

In FIG. 6, the interconnection between the two administrative domains is used as an example for description. Embodiments of this application are further applicable to a scenario in which three or more administrative domains are interconnected.

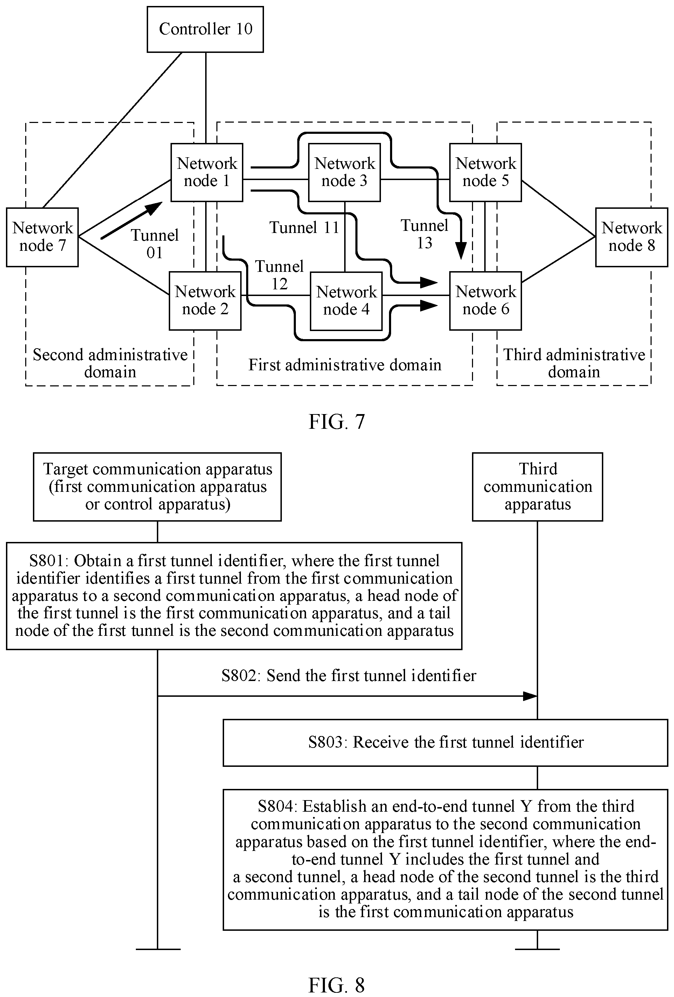

FIG. 7 is a diagram of another application scenario according to an embodiment of this application. In FIG. 7, interconnection between three administrative domains is used as an example for description. As shown in FIG. 7, a first administrative domain includes network nodes 1 to 6, a second administrative domain includes the network nodes 1 and 2 and a network node 7, and a third administrative domain includes the network nodes 5 and 6 and a network node 8. The network nodes 1 and 2 and the network nodes 5 and 6 are edge nodes of the first administrative domain. The network nodes 1 and 2 and the network node 7 are edge nodes of the second administrative domain. The network nodes 5 and 6 and the network node 8 are edge nodes of the third administrative domain. The first administrative domain and the second administrative domain are interconnected through the network nodes 1 and 2. The second administrative domain and the third administrative domain are interconnected through the network nodes 5 and 6. For example, the network node 7 is an ingress node of the second administrative domain, the network nodes 1 and 2 are egress nodes of the second administrative domain and ingress nodes of the first administrative domain, the network nodes 5 and 6 are egress nodes of the first administrative domain and ingress nodes of the third administrative domain, and the network node 8 is an egress nodes of the third administrative domain.

In an optional embodiment, as shown in FIG. 7, the first administrative domain is a backbone network, the second administrative domain and the third administrative domain are branch networks, the network nodes 1 and 2 are simultaneously used as PE nodes of the first administrative domain and CE nodes of the second administrative domain, and the network nodes 5 and 6 are simultaneously used as PE nodes of the first administrative domain and CE nodes of the third administrative domain. Both the network nodes 1 and 2 and the network nodes 5 and 6 may be GW nodes. In a specific embodiment, the first administrative domain is a self-built backbone network or an MSP backbone network, the second administrative domain is an SD-WAN branch network, and the third administrative domain is a conventional branch network.

In an optional embodiment, as shown in FIG. 7, the application scenario further includes a controller 10. The controller 10 is separately connected to the network nodes 1 to 8 (for brevity, FIG. 7 shows only connection lines between the controller 10 and the network node 1 and between the controller 10 and the network node 7). The controller 10 may perform route reflection between the network nodes 1 to 8, the controller 10 may further control the network nodes 1 to 7 to perform service forwarding, and the like.

As shown in FIG. 6 and FIG. 7, the second network domain includes a tunnel 01 from the network node 7 to the network node 1, a head node of the tunnel 01 is the network node 7, and a tail node of the tunnel 01 is the network node 1. The first administrative domain includes a plurality of tunnels 11 to 13 from the network node 1 to the network node 6, head nodes of the tunnels 11 to 13 are all the network node 1, and tail nodes of the tunnels 11 to 13 are all the network node 6. Currently, the network node 7 in the second administrative domain cannot learn of a network topology in the first administrative domain. As a result, the network node 7 cannot learn of the tunnels 11 to 13 from the network node 1 to the network node 6, and the network node 7 cannot establish an end-to-end tunnel that is from the network node 7 to the network node 6 and that passes through the network node 1. In embodiments of this application, the network node 1 may notify the network node 7 of at least one tunnel from the network node 1 to the network node 6, so that the network node 7 can learn of the at least one tunnel from the network node 1 to the network node 6, and the network node 7 can establish an end-to-end tunnel from the network node 7 to the network node 6 based on the tunnel 01 from the network node 7 to the network node 1 and the at least one tunnel from the network node 1 to the network node 6.

In a specific embodiment, the network node 1 sends a tunnel identifier of the at least one tunnel from the network node 1 to the network node 6 to the network node 7 through a route, and the network node 7 learns of the at least one tunnel from the network node 1 to the network node 6 based on the route. The network node 1 may directly send the route to the network node 7, or may send the route to the network node 7 through the controller 10. This is not limited in embodiments of this application.

In a specific embodiment, in the application scenarios shown in FIG. 6 and FIG. 7, the second administrative domain is an SD-WAN branch network, and the tunnel 01 is an SD-WAN tunnel. The tunnels 11 to 13 include at least one of the following: a segment routing multiprotocol label switching (segment routing multiprotocol label switching, SR-MPLS) tunnel, an SRv6 TE tunnel, a generic routing encapsulation (generic routing encapsulation, GRE) tunnel, an MPLS label distribution protocol (label distribution protocol, LDP) label switching path (label switching path, LSP) tunnel, a BGP LSP tunnel, or a resource reservation protocol traffic engineering (resource reservation protocol traffic engineering, RSVP-TE) LSP tunnel.

In an optional embodiment, at least one of the second administrative domain and the third administrative domain is an ADVPN network or an Ethernet virtual private network (Ethernet virtual private network, EVPN) network. For example, the second administrative domain is an ADVPN network, and the third administrative domain is an EVPN network.

The application scenarios shown in FIG. 6 and FIG. 7 are merely used as examples, and are not intended to limit the technical solutions in embodiments of this application. In an actual implementation process, a quantity of administrative domains, a type of the administrative domain, a quantity of network nodes in the administrative domain, a quantity of controllers, a connection relationship between network nodes, a connection relationship between a network node and a controller, and the like that are included in the application scenario may be configured based on a requirement. This is not limited in embodiments of this application.

The foregoing describes the application scenarios of this application, and the following describes method embodiments of embodiments of this application.

A communication apparatus mentioned in the following descriptions may be a network node, for example, a router or a switch, or may be a communication entity in the network node, for example, a chip, an interface board, a line card, or a software-based communication apparatus. A form of the communication apparatus is not limited in embodiments of this application. For example, the following method embodiments are applied to the application scenario shown in FIG. 6 or FIG. 7. A first communication apparatus is an ingress node of a first administrative domain and an egress node of a second administrative domain, a second communication apparatus is an egress node of the first administrative domain, and a third communication apparatus is an ingress node of the second administrative domain. When the following method embodiments are applied to the application scenario shown in FIG. 7, the second communication apparatus is also an ingress node of a third administrative domain, and a fourth communication apparatus is an egress node of the third administrative domain. A target communication apparatus described in the following method embodiments may be the first communication apparatus or a control apparatus. In a specific embodiment, with reference to FIG. 6 and FIG. 7, the first communication apparatus is the network node 1 or a communication entity in the network node 1, the second communication apparatus is the network node 6 or a communication entity in the network node 6, the third communication apparatus is the network node 7 or a communication entity in the network node 7, the fourth communication apparatus is the network node 8 or a communication entity in the network node 8, and the control apparatus is the controller 10 or a communication entity in the controller 10.

FIG. 8 is a flowchart of a network interconnection method according to an embodiment of this application. As shown in FIG. 8, the method includes the following steps S801 to S804.

S801: The target communication apparatus obtains a first tunnel identifier, where the first tunnel identifier identifies a first tunnel from the first communication apparatus to the second communication apparatus, a head node of the first tunnel is the first communication apparatus, and a tail node of the first tunnel is the second communication apparatus.

The first tunnel (tunnel) belongs to the first administrative domain, and the first administrative domain and the second administrative domain are interconnected through the first communication apparatus.

In an optional embodiment, the first tunnel identifier includes a segment identifier. For example, the first tunnel identifier is an MPLS label or an SRv6 SID. In some embodiments, the tunnel is also referred to as a path, and the tunnel identifier is also referred to as a path SID or a tunnel SID. The first tunnel may be, for example, any one of an SR-MPLS tunnel, an SRv6 TE tunnel, a GRE tunnel, an MPLS LDP LSP tunnel, a BGP LSP tunnel, or an RSVP-TE LSP tunnel.

In embodiments of this application, the first tunnel identifier may identify one tunnel from the first communication apparatus to the second communication apparatus, or may identify a plurality of tunnels from the first communication apparatus to the second communication apparatus (that is, the first tunnel identifier identifies a group of tunnels, and the group of tunnels have a same tunnel identifier). In an embodiment, the first tunnel identifier identifies one tunnel from the first communication apparatus to the second communication apparatus, a head node of the tunnel is the first communication apparatus, a tail node of the tunnel is the second communication apparatus, and the tunnel is the first tunnel. In another embodiment, the first tunnel identifier identifies a plurality of tunnels from the first communication apparatus to the second communication apparatus, head nodes of the plurality of tunnels are all the first communication apparatus, tail nodes of the plurality of tunnels are all the second communication apparatus, and the plurality of tunnels are all first tunnels. A quantity of tunnels identified by the first tunnel identifier is not limited in embodiments of this application.

In an optional embodiment, the target communication apparatus obtains a plurality of tunnel identifiers, where the plurality of tunnel identifiers include the first tunnel identifier and a third tunnel identifier, the first tunnel identifier identifies the first tunnel from the first communication apparatus to the second communication apparatus, the third tunnel identifier identifies a third tunnel from the first communication apparatus to the second communication apparatus, both the head node of the first tunnel and a head node of the third tunnel are the first communication apparatus, and both the tail node of the first tunnel and a tail node of the third tunnel are the second communication apparatus. The target communication apparatus determines the first tunnel based on performance information of the first tunnel and performance information of the third tunnel, and then the target communication apparatus obtains the first tunnel identifier that identifies the first tunnel. In a specific embodiment, performance information of a tunnel represents performance of the tunnel. The target communication apparatus determines performance of the first tunnel based on the performance information of the first tunnel; the target communication apparatus determines performance of the third tunnel based on the performance information of the third tunnel; and the target communication apparatus determines the first tunnel based on the performance of the first tunnel and the performance of the third tunnel.

In a specific embodiment, the performance of the tunnel includes at least one of available bandwidth (bandwidth), delay (delay), jitter (jitter), or packet loss (loss). In an example, the performance of the tunnel includes available bandwidth. The target communication apparatus determines that available bandwidth of the first tunnel is greater than available bandwidth of the third tunnel, and the target communication apparatus determines the first tunnel based on the available bandwidth of the first tunnel being greater than the available bandwidth of the third tunnel. In another example, the performance of the tunnel includes delay. The target communication apparatus determines that delay of the first tunnel is less than delay of the third tunnel, and the target communication apparatus determines the first tunnel based on the delay of the first tunnel being less than the delay of the third tunnel. In still another example, the performance of the tunnel includes jitter. The target communication apparatus determines that jitter of the first tunnel is less than jitter of the third tunnel, and the target communication apparatus determines the first tunnel based on the jitter of the first tunnel being less than the jitter of the third tunnel. In yet another example, the performance of the tunnel includes packet loss. The target communication apparatus determines that packet loss of the first tunnel is less than packet loss of the third tunnel, and the target communication apparatus determines the first tunnel based on the packet loss of the first tunnel being less than the packet loss of the third tunnel.

In a specific embodiment, the target communication apparatus determines the first tunnel based on the performance of the first tunnel, the performance of the third tunnel, and a tunnel screening policy. The tunnel screening policy includes priorities of a plurality of types of performance. For example, the performance of the tunnel includes bandwidth, delay, jitter, and packet loss, and the tunnel screening policy includes that priorities of the four types of performance in descending order are: available bandwidth, delay, jitter, and packet loss. In a specific embodiment, the tunnel screening policy is: preferentially performing screening on tunnels based on available bandwidth, performing screening on tunnels based on delay in a case of equal available bandwidth, performing screening on tunnels based on jitter in a case of equal delay, and performing screening on tunnels based on packet loss in a case of equal jitter. Based on the tunnel screening policy, the target communication apparatus first determines whether the available bandwidth of the first tunnel is equal to the available bandwidth of the third tunnel. If the available bandwidth of the first tunnel is not equal to the available bandwidth of the third tunnel, the target communication apparatus determines the first tunnel based on the available bandwidth of the first tunnel and the available bandwidth of the third tunnel. If the available bandwidth of the first tunnel is equal to the available bandwidth of the third tunnel, the target communication apparatus determines whether the delay of the first tunnel is equal to the delay of the third tunnel. If the delay of the first tunnel is not equal to the delay of the third tunnel, the target communication apparatus determines the first tunnel based on the delay of the first tunnel and the delay of the third tunnel. If the delay of the first tunnel is equal to the delay of the third tunnel, the target communication apparatus determines whether the jitter of the first tunnel is equal to the jitter of the third tunnel. If the jitter of the first tunnel is not equal to the jitter of the third tunnel, the target communication apparatus determines the first tunnel based on the jitter of the first tunnel and the jitter of the third tunnel. If the jitter of the first tunnel is equal to the jitter of the third tunnel, the target communication apparatus determines whether the packet loss of the first tunnel is equal to the packet loss of the third tunnel. If the packet loss of the first tunnel is not equal to the packet loss of the third tunnel, the target communication apparatus determines the first tunnel based on the packet loss of the first tunnel and the packet loss of the third tunnel. It should be noted that the tunnel screening policy described in this paragraph is merely used as an example. The tunnel screening policy may alternatively be another policy, and the priorities of the plurality of types of performance indicated by the tunnel screening policy may alternatively be other priorities. The tunnel screening policy is not limited in embodiments of this application.

In an optional embodiment, the plurality of tunnel identifiers obtained by the target communication apparatus identify a plurality of tunnels (for example, the tunnels 11 to 13 shown in FIG. 6 and FIG. 7) from the first communication apparatus to the second communication apparatus. For example, the plurality of tunnel identifiers are in one-to-one correspondence with the plurality of tunnels, and each tunnel identifier identifies one of the plurality of tunnels. Head nodes of the plurality of tunnels are all the first communication apparatus, and tail nodes of the plurality of tunnels are all the second communication apparatus. The target communication apparatus determines performance of the plurality of tunnels based on performance information of the plurality of tunnels, and the target communication apparatus determines the first tunnel among the plurality of tunnels based on the performance of the plurality of tunnels. In an embodiment, the performance of the tunnel includes available bandwidth. The target communication apparatus determines a tunnel whose available bandwidth is greater than a bandwidth threshold among the plurality of tunnels as the first tunnel, and/or the target communication apparatus determines a tunnel whose available bandwidth is the largest among the plurality of tunnels as the first tunnel. In another embodiment, the performance of the tunnel includes delay. The target communication apparatus determines a tunnel whose delay is less than a delay threshold among the plurality of tunnels as the first tunnel, and/or the target communication apparatus determines a tunnel whose delay is the smallest among the plurality of tunnels as the first tunnel. In still another embodiment, the performance of the tunnel includes jitter. The target communication apparatus determines a tunnel whose jitter is less than a jitter threshold among the plurality of tunnels as the first tunnel, and/or the target communication apparatus determines a tunnel whose jitter is the smallest among the plurality of tunnels as the first tunnel. In yet another embodiment, the performance of the tunnel includes packet loss. The target communication apparatus determines a tunnel whose packet loss is less than a packet loss threshold among the plurality of tunnels as the first tunnel, and/or the target communication apparatus determines a tunnel whose packet loss is the smallest among the plurality of tunnels as the first tunnel. It should be noted that the four embodiments described in this paragraph may be implemented separately, or may be implemented in combination. In other words, in a process of determining the first tunnel among the plurality of tunnels, the target communication apparatus may consider only one type of performance of the tunnel, or may consider a plurality of types of performance. In addition, the target communication apparatus may determine the first tunnel among the plurality of tunnels based on the performance of the plurality of tunnels and the tunnel screening policy. For a specific implementation process, refer to the foregoing descriptions. Details are not described in embodiments of this application.

It should be noted that, in some embodiments, the performance information of the tunnel is also referred to as transmission performance information of the tunnel, service level agreement (service level agreement, SLA) information of the tunnel, metric (metric) information of the tunnel, quality information of the tunnel, or the like. Correspondingly, the performance of the tunnel is also referred to as transmission performance of the tunnel, SLA performance of the tunnel, a metric of the tunnel, quality of the tunnel, or the like. This is not limited in embodiments of this application.

In embodiments of this application, the target communication apparatus may be the first communication apparatus or the control apparatus. When the target communication apparatus is the control apparatus, the first communication apparatus is connected to the target communication apparatus (that is, the control apparatus). An implementation of obtaining, by the target communication apparatus, a tunnel identifier that identifies a tunnel from the first communication apparatus to the second communication apparatus and an implementation of obtaining, by the target communication apparatus, performance information of the tunnel from the first communication apparatus to the second communication apparatus may vary with the target communication apparatus. This is described in the following two cases.

**Case 1:** The target communication apparatus is the first communication apparatus, the target communication apparatus generates a tunnel identifier that identifies a tunnel from the first communication apparatus to the second communication apparatus, and the target communication apparatus detects the tunnel from the first communication apparatus to the second communication apparatus to obtain performance information of the tunnel.

In a specific embodiment, the target communication apparatus receives a VPN route A advertised by the second communication apparatus, where a next hop address of the VPN route A is an address of the second communication apparatus. The target communication apparatus determines at least one tunnel from the first communication apparatus (that is, the target communication apparatus) to the second communication apparatus based on the next hop address of the VPN route A, where a head node of the at least one tunnel is the first communication apparatus, a tail node of the at least one tunnel is the second communication apparatus, and the at least one tunnel includes the first tunnel. The target communication apparatus generates a tunnel identifier that identifies the at least one tunnel, and the tunnel identifier of the at least one tunnel includes the first tunnel identifier. For example, the next hop address of the VPN route A is an address of a loopback interface of the second communication apparatus. This is not limited in embodiments of this application.

The at least one tunnel from the first communication apparatus to the second communication apparatus may be pre-created, or may be created after the target communication apparatus receives the VPN route A. In an embodiment, the at least one tunnel is pre-created by the target communication apparatus. After the target communication apparatus receives the VPN route A, the target communication apparatus determines the pre-created at least one tunnel based on the next hop address of the VPN route A, and generates the tunnel identifier for the at least one tunnel. In another embodiment, the at least one tunnel is created after the target communication apparatus receives the VPN route A. After the target communication apparatus receives the VPN route A, the target communication apparatus creates the at least one tunnel from the first communication apparatus to the second communication apparatus based on the next hop address of the VPN route A, and the target communication apparatus generates the tunnel identifier for the at least one tunnel.

In a specific embodiment, the VPN route A may be sent by the second communication apparatus to the target communication apparatus (that is, the first communication apparatus) through a session connection between the second communication apparatus and the target communication apparatus, or may be sent by the second communication apparatus to the target communication apparatus through the control apparatus or an RR. The session connection between target communication apparatuses may be a BGP session connection or another session connection. This is not limited in embodiments of this application.

In a specific embodiment, the VPN route A is advertised by the second communication apparatus based on a VPN address family. The second communication apparatus advertises (or announces) the VPN route A by using a BGP update (update) message. The VPN route A further includes a VPN SID, and the VPN SID is a service SID allocated by the second communication apparatus. In an optional embodiment, the VPN route A is a VPNv4 route advertised based on a VPNv4 address family, a VPNv6 route advertised based on a VPNv6 address family, or an EVPN route advertised based on an EVPN address family. This is not limited in embodiments of this application.

In an optional embodiment, after receiving the VPN route A advertised by the second communication apparatus, the target communication apparatus (that is, the first communication apparatus) continues to send the VPN route A. For example, the target communication apparatus sends the VPN route A to a BGP peer of the target communication apparatus. In an embodiment, the target communication apparatus (that is, the first communication apparatus) establishes a BGP peer relationship with the control apparatus, and the target communication apparatus sends the VPN route A to the control apparatus. In another embodiment, the target communication apparatus (that is, the first communication apparatus) establishes a BGP peer relationship with the third communication apparatus in the second administrative domain, and the target communication apparatus sends the VPN route A to the third communication apparatus. The target communication apparatus can also send the VPN route A to other BGP peers. In embodiments of this application, in a process in which the target communication apparatus sends the VPN route A, the next hop address of the VPN route A is not modified (that is, the next hop address of the VPN route A is maintained as the address of the second communication apparatus), but other information of the VPN route A may be modified. These modifications are standard operations of VPN route advertisement, and do not affect the technical solutions of embodiments of this application.

**Case 2:** The target communication apparatus is the control apparatus, and the target communication apparatus is connected to the first communication apparatus. The target communication apparatus receives at least one tunnel identifier of at least one tunnel from the first communication apparatus to the second communication apparatus and performance information of the at least one tunnel that are sent by the first communication apparatus. A head node of the at least one tunnel is the first communication apparatus, a tail node of the at least one tunnel is the second communication apparatus, the at least one tunnel includes the first tunnel, and the tunnel identifier of the at least one tunnel includes the first tunnel identifier.

In an optional embodiment, the target communication apparatus receives a route X1 sent by the first communication apparatus, and the route X1 includes the at least one tunnel identifier of the at least one tunnel from the first communication apparatus to the second communication apparatus and the performance information of the at least one tunnel. The target communication apparatus obtains the at least one tunnel identifier and the performance information of the at least one tunnel from the router X1.

In an optional embodiment, the route X1 may further include an identifier of the head node (namely, the first communication apparatus) of the at least one tunnel and an identifier of the tail node (namely, the second communication apparatus) of the at least one tunnel. The identifier of the head node of the at least one tunnel may be an address of the head node of the at least one tunnel, and the identifier of the tail node of the at least one tunnel may be an address of the tail node of the at least one tunnel.

In an optional embodiment, the route X1 includes any one of the following: an SD-WAN route; a BGP-LS route; a BGP labeled route; a BGP FS route; a BGP routing policy distribution (BGP routing policy distribution, BGP-RPD) route; an overlay management protocol (overlay management protocol, OMP) route; or a path computation element communication protocol (path computation element communication protocol, PCEP) route. The BGP labeled route includes any one of the following: a BGP labeled-unicast (labeled-unicast, LU) route; a BGP classful transport planes (classful transport planes, CT) route; or a BGP color-aware routing (color-aware routing, CAR) route. The BGP CT route is also referred to as a BGP intent transport planes route, and the BGP CAR route is also referred to as a BGP intent-aware route.

An implementation in which the route X1 carries the tunnel identifier varies with the route X1, which is described in the following four embodiments.

**Embodiment 1:** The route X1 is the BGP FS route, the OMP route, or the PCEP route, the route X1 includes a traffic control policy, and the traffic control policy includes the tunnel identifier of the at least one tunnel from the first communication apparatus to the second communication apparatus. For example, the traffic control policy includes a plurality of traffic matching rules, each traffic matching rule includes flow characteristic information and one tunnel identifier, and the tunnel identifier identifies a tunnel from the first communication apparatus to the second communication apparatus. The flow characteristic information includes at least one of a destination address, a source address, an IP protocol number, a port number, a destination port number, a source port number, an ICMP type, an ICMP code, TCP flags, a DSCP, or a fragment type.

In an example, the route X1 is the BGP FS route, the route X1 includes an MP_REACH_NLRI attribute, and the MP_REACH_NLRI attribute includes the at least one tunnel identifier of the at least one tunnel from the first communication apparatus to the second communication apparatus. In a specific example, a format of the MP_REACH_NLRI attribute is shown in FIG. 1, and an NLRI field of the MP_REACH_NLRI attribute includes the at least one tunnel identifier. For example, the NLRI field of the MP_REACH_NLRI attribute includes at least one NLRI field that is in one-to-one correspondence with the at least one tunnel identifier, and the at least one tunnel identifier is carried in the at least one NLRI field in one-to-one correspondence. In this example, a value of an AFI field of the MP_REACH_NLRI attribute is 1 or 2, and a value of an SAFI field of the MP_REACH_NLRI attribute is 133 or 134.

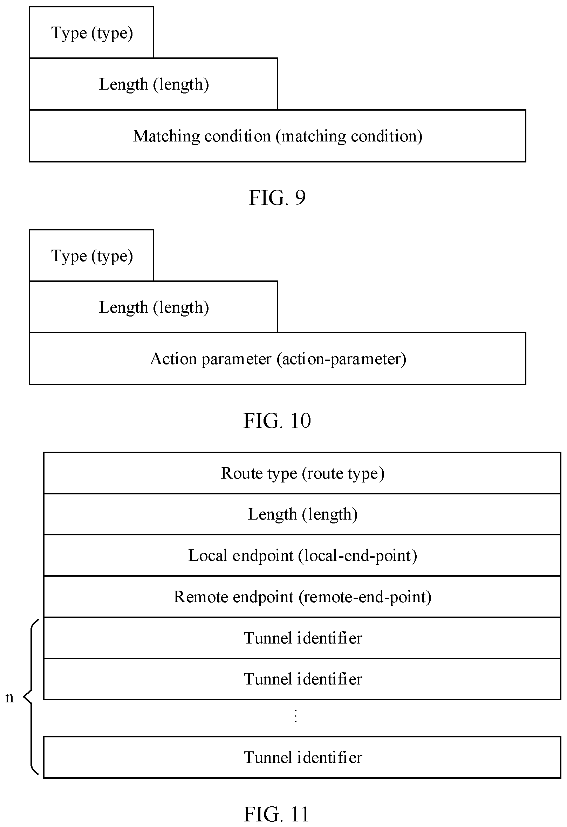

In another example, the route X1 is the OMP route or the PCEP route, and the route X1 includes a matching type-length-value (type-length-value, TLV) field and an action TLV field. The matching TLV field may be used to carry a destination VPN prefix. The action TLV field includes a tunnel identifier of a tunnel from the first communication apparatus to the second communication apparatus. One action TLV field may carry one or more tunnel identifiers. When one action TLV field carries one tunnel identifier, the route X1 may carry a plurality of tunnel identifiers by using a plurality of action TLV fields. In a specific example, a format of the matching TLV field is shown in FIG. 9, and a format of the action TLV field is shown in FIG. 10.

Refer to FIG. 9. The matching TLV field includes a type subfield, a length subfield, and a matching condition subfield. The matching condition subfield is used to carry the destination VPN prefix. The type subfield identifies a type of the matching condition subfield (specifically, a value of the matching condition subfield). In this example, the type subfield identifies that the type of the matching condition subfield is an address prefix (for example, an IP address prefix). The length subfield identifies a length of the matching condition subfield. For example, a length of the type subfield is 1 octet, a length of the length subfield is 2 octets, and the length of the matching condition subfield is variable.

Refer to FIG. 10. The action TLV field includes a type subfield, a length subfield, and an action parameter subfield. The action parameter subfield is used to carry the tunnel identifier. The type subfield identifies a type of the action parameter subfield (specifically, a value of the action parameter subfield). In this example, the type subfield identifies that the type of the action parameter subfield is a tunnel identifier. The length subfield identifies a length of the action parameter subfield. For example, a length of the type subfield is 1 octet, a length of the length subfield is 2 octets, and the length of the action parameter subfield is variable. In an optional embodiment, the action TLV field shown in FIG. 10 is used to carry one tunnel identifier, and the route X1 may include a plurality of action TLV fields shown in FIG. 10 to carry a plurality of tunnel identifiers.

**Embodiment 2:** The route X1 is the BGP-RPD route, the OMP route, or the PCEP route, the route X1 includes a routing control policy, and the routing control policy includes the tunnel identifier of the at least one tunnel from the first communication apparatus to the second communication apparatus.

For example, the route X1 includes a matching TLV field and an action TLV field. The matching TLV field may be used to carry a destination VPN prefix, and the action TLV field includes the tunnel identifier of the tunnel from the first communication apparatus to the second communication apparatus. One action TLV field may carry one or more tunnel identifiers. When one action TLV field carries one tunnel identifier, the route X1 may carry a plurality of tunnel identifiers by using a plurality of action TLV fields. In a specific example, a format of the matching TLV field is shown in FIG. 9, and a format of the action TLV field is shown in FIG. 10. The action TLV field shown in FIG. 10 is used to carry one tunnel identifier, and the route X1 may include a plurality of action TLV fields shown in FIG. 10 to carry a plurality of tunnel identifiers.

**Embodiment 3:** The route X1 is the SD-WAN route or the BGP-LS route, the route X1 includes an MP_REACH_NLRI attribute, and the MP_REACH_NLRI attribute includes the at least one tunnel identifier of the at least one tunnel from the first communication apparatus to the second communication apparatus.

In a specific embodiment, a format of the MP_REACH_NLRI attribute is shown in FIG. 1, and an NLRI field of the MP_REACH_NLRI attribute includes the at least one tunnel identifier. For example, the NLRI field includes an NLRI field, and the NLRI field includes the at least one tunnel identifier.

In an example, the route X1 is the SD-WAN route, and an NLRI field of an MP_REACH_NLRI attribute of the route X1 includes an NLRI field shown in FIG. 11. The NLRI field may be referred to as an SD-WAN NLRI field (the NLRI field in the MP_REACH_NLRI attribute of the SD-WAN route). Refer to FIG. 11. The SD-WAN NLRI field includes a route type subfield, a length subfield, a local endpoint (local-end-point) subfield, a remote endpoint (remote-end-point) subfield, and n tunnel identifier subfields, where n is a positive integer. The local endpoint subfield, the remote endpoint subfield, and the n tunnel identifier subfields form a type specific value (type specific value) subfield of the SD-WAN NLRI field. The route type subfield is used to carry a route type, and a value of the route type field is to be defined (to be defined, TBD). The length subfield identifies a length of the type specific value subfield. The local endpoint subfield is used to carry an address of a local endpoint (in embodiments, the local endpoint is the head node of the tunnel from the first communication apparatus to the second communication apparatus, that is, the first communication apparatus). The remote endpoint subfield is used to carry an address of a remote endpoint (in embodiments, the remote endpoint is the tail node of the tunnel from the first communication apparatus to the second communication apparatus, that is, the second communication apparatus). The n tunnel identifier fields are used to carry n tunnel identifiers of n tunnels from the first communication apparatus to the second communication apparatus. For example, a length of the route type subfield and a length of the length subfield are both 2 octets, a length of the local endpoint subfield is 4 octets or 16 octets, a length of the remote endpoint subfield is 4 octets or 16 octets, and a length of the tunnel identifier subfield is 3 octets or 16 octets.

In another example, the route X1 is the BGP-LS route, and an NLRI field of an MP_REACH_NLRI attribute of the route X1 includes an NLRI field shown in FIG. 5. The NLRI field may be referred to as a BGP-LS NLRI field (the NLRI field in the MP_REACH_NLRI attribute of the BGP-LS route). The NLRI field includes the at least one tunnel identifier of the at least one tunnel from the first communication apparatus to the second communication apparatus. As shown in FIG. 5, the NLRI field includes a link-state NLRI subfield. The link-state NLRI subfield is used to carry a tunnel identifier. One link-state NLRI subfield may carry one or more tunnel identifiers. When one link-state NLRI subfield carries one tunnel identifier, the BGP-LS NLRI field may carry a plurality of tunnel identifiers by using a plurality of link-state NLRI subfields.

**Embodiment 4:** The route X1 is the BGP labeled route, the route X1 includes an MP_REACH_NLRI attribute or a BGP prefix segment identifier (prefix-SID) attribute, and the MP_REACH_NLRI attribute or the BGP prefix-SID attribute includes the at least one tunnel identifier of the at least one tunnel from the first communication apparatus to the second communication apparatus. It can be learned from the foregoing description that the route X1 may be any one of a BGP LU route, a BGP CT route, or a BGP CAR route. The following uses an example in which the route X1 is the BGP LU route, the BGP CT route, or the BGP CAR route for description.

In an embodiment, the route X1 is the BGP LU route, the BGP CT route, or the BGP CAR route, the route X1 includes an MP_REACH_NLRI attribute, and the MP_REACH_NLRI attribute includes the at least one tunnel identifier of the at least one tunnel from the first communication apparatus to the second communication apparatus. In a specific example, a format of the MP_REACH_NLRI attribute is shown in FIG. 1. An NLRI field of the MP_REACH_NLRI attribute includes an NLRI field, the NLRI field includes a label subfield, and the label subfield includes the tunnel identifier of the tunnel from the first communication apparatus to the second communication apparatus.

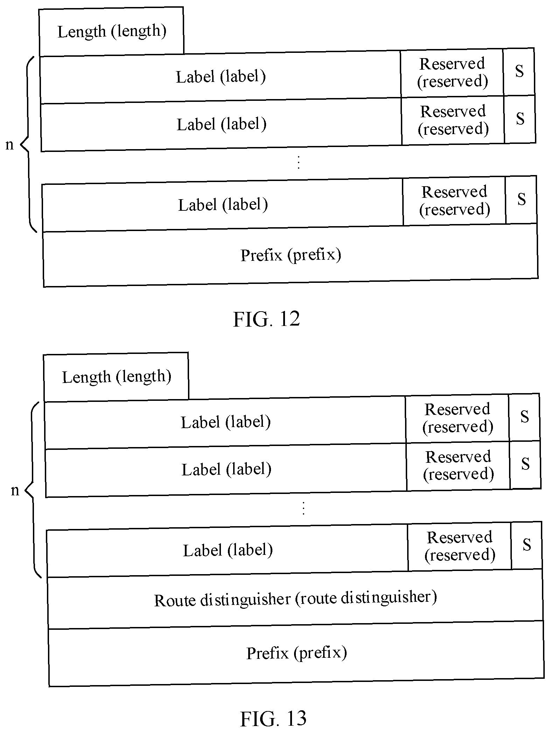

In a specific example, an NLRI field in an NLRI field of an MP_REACH_NLRI attribute of the BGP LU route may be referred to as a BGP LU NLRI field. When the route X1 is the BGP LU route, the NLRI field of the MP_REACH_NLRI attribute of the route X1 includes a BGP LU NLRI field shown in FIG. 12. Refer to FIG. 12. The BGP LU NLRI field includes a length subfield, a prefix subfield, n label subfields, n reserved subfields, and n S bits (bottom of stack bits), where n is a positive integer. The length subfield identifies a total length of subfields other than the length subfield in the BGP LU NLRI field. The prefix subfield is used to carry an address of the tail node of the tunnel from the first communication apparatus to the second communication apparatus. The n label subfields are used to carry n tunnel identifiers of n tunnels from the first communication apparatus to the second communication apparatus. The n S bits are in one-to-one correspondence with the n label subfields, and each S bit identifies whether a corresponding label subfield is a bottom of stack label subfield (that is, identifies whether the corresponding label subfield is a last label subfield). For example, in the n label subfields, values of S bits corresponding to the first n-1 label subfields are 0, and a value of an S bit corresponding to an n^{th} label subfield is 1, indicating that none of the first n-1 label subfields is a bottom of stack label subfield, and the n^{th} label subfield is a bottom of stack label subfield. For example, a length of the length subfield is 1 octet; a length of the label subfield is 20 bits; a length of the reserved subfield is 3 bits; the S bit is 1 bit; and a length of the prefix subfield is generally 32 octets or 128 octets. The length of the prefix subfield is equal to the length indicated by the length subfield minus lengths of the n label subfields, lengths of the n reserved subfields, and lengths of the n S bits. It should be noted that the BGP LU NLRI field shown in FIG. 12 is applicable to a tunnel identifier in a label form. When the tunnel identifier is an MPLS label, the BGP LU NLRI field shown in FIG. 12 may be used to carry the tunnel identifier of the tunnel from the first communication apparatus to the second communication apparatus.

In a specific example, an NLRI field in an NLRI field of an MP_REACH_NLRI attribute of the BGP CT route may be referred to as a BGP CT NLRI field. When the route X1 is the BGP CT route, the NLRI field of the MP_REACH_NLRI attribute of the route X1 includes a BGP CT NLRI field shown in FIG. 13. Refer to FIG. 13. A format of the BGP CT NLRI field is basically the same as that of the BGP LU NLRI field shown in FIG. 12, and a difference lies in that the BGP CT NLRI field further includes a route distinguisher (route distinguisher, RD) subfield. In the BGP CT NLRI field, the RD subfield is used to carry a route identifier, the prefix subfield is used to carry an address, and the RD subfield and the prefix subfield are combined to indicate the tail node of the tunnel from the first communication apparatus to the second communication apparatus. A length of the RD subfield is 8 octets. For meanings and descriptions of other fields in the BGP CT NLRI field, refer to the explanations of the BGP LU NLRI field shown in FIG. 12. Details are not described herein again. It should be noted that the BGP CT field shown in FIG. 13 is applicable to a tunnel identifier in a label form. When the tunnel identifier is an MPLS label, the BGP CT field shown in FIG. 13 may be used to carry the tunnel identifier of the tunnel from the first communication apparatus to the second communication apparatus.

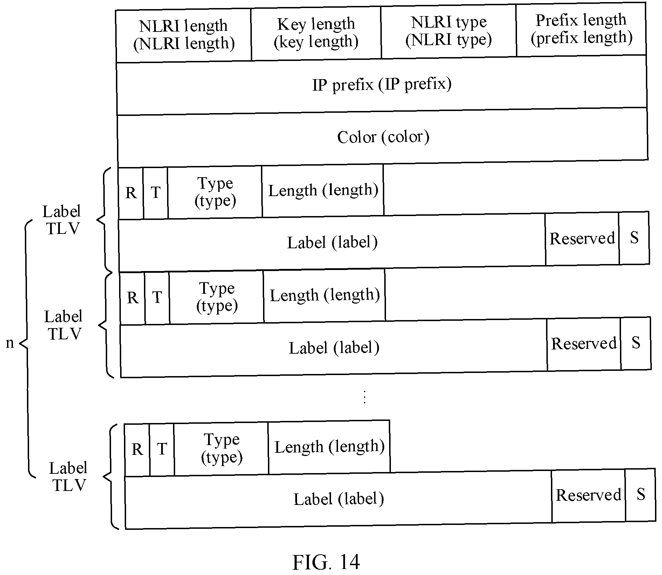

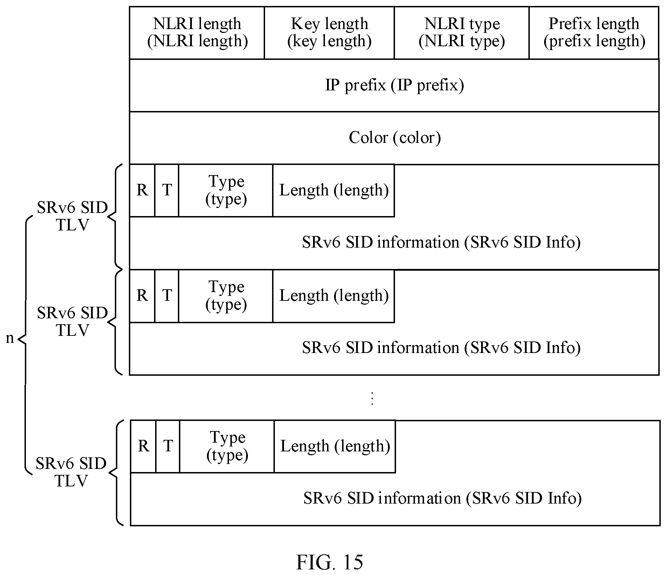

In a specific example, an NLRI field in an NLRI field of an MP_REACH_NLRI attribute of the BGP CAR route may be referred to as a BGP CAR NLRI field. When the route X1 is the BGP CAR route, the NLRI field of the MP_REACH_NLRI attribute of the route X1 includes a BGP CAR NLRI field shown in FIG. 14 and/or a BGP CAR NLRI field shown in FIG. 15.

Refer to FIG. 14. The BGP CAR NLRI field includes an NLRI length subfield, a key length (key length) subfield, an NLRI type subfield, a prefix length (prefix length) subfield, an IP prefix subfield, a color (color) subfield, and n label TLV fields, where n is a positive integer. The label TLV field includes an R bit (reserved bit), a T bit (transitive bit), a type subfield, a length subfield, a label subfield, a reserved subfield, and an S bit (bottom of stack bit). The NLRI length subfield identifies a total length of subfields other than the NLRI length subfield in the BGP CAR NLRI field. The key length subfield identifies a key field (for example, including an IP prefix subfield) in the BGP CAR NLRI field. The NLRI type subfield identifies an NLRI type. In this application, a value of the NLRI type subfield may be 1. The prefix length subfield identifies a length of the IP prefix subfield. The IP prefix subfield is used to carry an IP prefix. In this application, the IP prefix subfield may carry an address of the tail node of the tunnel from the first communication apparatus to the second communication apparatus. The color subfield may be used to carry a second tunnel identifier described below in this application. In the label TLV field, the T bit identifies whether the label TLV field is transitive; and when a value of the T bit is 1, it indicates that the label TLV field is transitive; or when the value of the T bit is 0, it indicates that the label TLV field is non-transitive. The type subfield identifies a type of a value field of the label TLV field (for example, the label subfield, the reserved subfield, and the S bit form the value field). The length subfield identifies a length of the value field of the label TLV field. The label subfield is used to carry the tunnel identifier of the tunnel from the first communication apparatus to the second communication apparatus. The S bit identifies whether the label subfield is a bottom of stack label subfield (or identifies whether the label TLV field is a bottom of stack label TLV field). For example, in the n label TLV fields, values of S bits in the first n-1 label TLV fields are 0, and a value of an S bit in an n^{th} label TLV field is 1, indicating that none of the first n-1 label TLV fields is a bottom of stack label TLV field, and the n^{th} label TLV field is a bottom of stack label TLV field. For example, a length of the NLRI length subfield, a length of the key length subfield, a length of the NLRI type subfield, and a length of the prefix length subfield are all 1 octet, a length of the R bit and a length of the T bit are both 1 bit, a length of the type subfield in the label TLV field is 6 bits, a length of the length subfield in the label TLV field is 1 octet, and a length of the label subfield in the label TLV field is 20 bits, a length of the reserved subfield is 3 bits, and the S bit is 1 bit. It should be noted that the BGP CAR NLRI field shown in FIG. 14 is applicable to a tunnel identifier in a label form. When the tunnel identifier is an MPLS label, the BGP CAR NLRI field shown in FIG. 14 may be used to carry n tunnel identifiers of n tunnels from the first communication apparatus to the second communication apparatus. The n tunnel identifiers are carried in label subfields in the n label TLV fields in one-to-one correspondence.

Refer to FIG. 15. The BGP CAR NLRI field includes an NLRI length subfield, a key length subfield, an NLRI type subfield, a prefix length subfield, an IP prefix subfield, a color subfield, and n SRv6 SID TLV fields, where n is a positive integer. For meanings of the NLRI length subfield, the key length subfield, the NLRI type subfield, the prefix length subfield, the IP prefix subfield, and the color subfield, refer to the explanations of the BGP CAR NLRI field shown in FIG. 14. Details are not described herein again. The SRv6 SID TLV field is mainly described herein. As shown in FIG. 15, the SRv6 SID TLV field includes an R bit (reserved bit), a T bit (transitive bit), a type subfield, a length subfield, and an SRv6 SID information subfield. The T bit identifies whether the SRv6 SID TLV field is transitive. The type subfield identifies a type of a value field (for example, the SRv6 SID information subfield) of the SRv6 SID TLV field. The length subfield identifies a length of the SRv6 SID TLV field. The SRv6 SID TLV field is used to carry one tunnel identifier of a tunnel from the first communication apparatus to the second communication apparatus. It should be noted that the BGP CAR NLRI field shown in FIG. 15 is applicable to a tunnel identifier in an SRv6 SID form. When the tunnel identifier is an SRv6 SID, the BGP CAR NLRI field shown in FIG. 15 may be used to carry n tunnel identifiers of n tunnels from the first communication apparatus to the second communication apparatus. The n tunnel identifiers are carried in the SRv6 SID information subfields in the n SRv6 SID TLV fields in one-to-one correspondence.

In another embodiment, the route X1 is the BGP LU route, the BGP CT route, or the BGP CAR route, the route X1 includes a BGP prefix-SID attribute, and the BGP prefix-SID attribute includes the at least one tunnel identifier of the at least one tunnel from the first communication apparatus to the second communication apparatus. In a specific example, the BGP prefix-SID attribute includes an SRv6 service (SRv6 service) TLV field, the SRv6 service TLV field includes an SRv6 SID message sub-TLV (sub-TLV) field, and the SRv6 SID message sub-TLV field is used to carry a tunnel identifier.

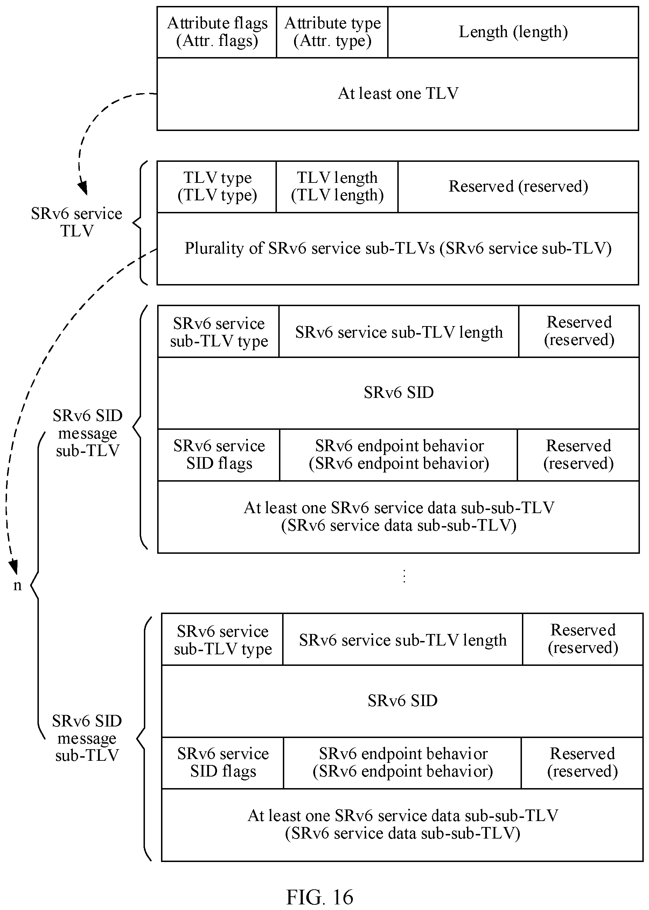

In a specific example, a format of the BGP prefix-SID attribute is shown in FIG. 16. The BGP prefix-SID attribute includes an attribute flags (Attr. flags) field, an attribute type (Attr. type) field, a length field, and at least one TLV field. The attribute flags field is used to carry attribute flags of the BGP prefix-SID attribute, the attribute type field is used to carry an attribute type of the BGP prefix-SID attribute, and the length field identifies a total length of fields after the length field in the BGP prefix-SID attribute. The at least one TLV field includes an SRv6 service TLV field. The SRv6 service TLV field includes a TLV type (TLV type) subfield, a TLV length (TLV length) subfield, a reserved field, and a plurality of SRv6 service sub-TLV (SRv6 service sub-TLV) fields. The TLV type subfield identifies a type of the SRv6 service TLV field, and the TLV length subfield identifies a length of the SRv6 service TLV field. The plurality of SRv6 service sub-TLV fields include n SRv6 SID message sub-TLV fields. The SRv6 SID message sub-TLV field includes: an SRv6 service sub-TLV type field, an SRv6 service sub-TLV length field, a reserved (reserved) field, an SRv6 SID field (also referred to as an SRv6 SID value field), an SRv6 service SID flags field, an SRv6 endpoint behavior (SRv6 endpoint behavior) field, and at least one SRv6 service data sub-sub-TLV (SRv6 service data sub-sub-TLV) field. The SRv6 service sub-TLV type field identifies a type of the SRv6 SID message sub-TLV field, the SRv6 service sub-TLV length field identifies a length of the SRv6 SID message sub-TLV field, the SRv6 SID field is used to carry the tunnel identifier of the tunnel from the first communication apparatus to the second communication apparatus, the SRv6 service SID flag field is used to carry an SRv6 service SID flag, the SRv6 endpoint behavior field is used to carry an SRv6 endpoint behavior, and the SRv6 endpoint behavior field is used to carry an SRv6 endpoint behavior. It should be noted that the BGP CAR NLRI field shown in FIG. 16 is applicable to a tunnel identifier in an SRv6 SID form. When the tunnel identifier is an SRv6 SID, the BGP prefix-SID attribute shown in FIG. 16 may be used to carry n tunnel identifiers of n tunnels from the first communication apparatus to the second communication apparatus. The n tunnel identifiers are carried in the n SRv6 SID message sub-TLV fields in one-to-one correspondence.

The foregoing describes the implementation in which the route X1 carries the tunnel identifier, and the following describes an implementation in which the route X1 carries the performance information of the tunnel. The implementation in which the route X1 carries the performance information of the tunnel in the following descriptions is applicable to the SD-WAN route, the BGP-LS route, the BGP labeled route, the BGP FS route, the BGP-RPD route, the OMP route, and the PCEP route; and is applicable to the BGP LU route, the BGP CT route, and the BGP CAR route.

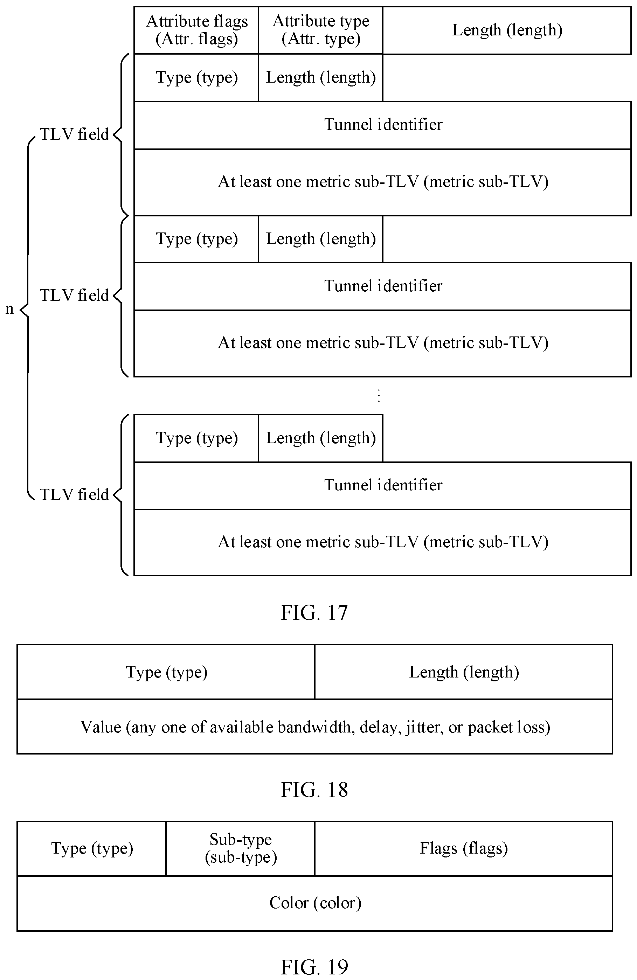

In an optional embodiment, the route X1 includes a BGP tunnel performance attribute, where the BGP tunnel performance attribute is a BGP extended community attribute, and the BGP tunnel performance attribute includes the performance information of the at least one tunnel from the first communication apparatus to the second communication apparatus. In a specific embodiment, the BGP tunnel performance attribute includes at least one TLV field, the at least one TLV field is in one-to-one correspondence with the at least one tunnel, and each of the at least one TLV field is used to carry performance information of a corresponding tunnel. For example, a format of the BGP tunnel performance attribute is shown in FIG. 17. Refer to FIG. 17. The BGP tunnel performance attribute includes attribute flags (Attr. flags) field, an attribute type (Attr. type) field, and n TLV fields, where n is a positive integer. The attribute flags field is used to carry attribute flags of the BGP tunnel performance attribute, the attribute type field is used to carry an attribute type of the BGP tunnel performance attribute, and the length field identifies a total length of fields after the length field in the BGP tunnel performance attribute. The n TLV fields are used to carry performance information of n tunnels from the first communication apparatus to the second communication apparatus. Specifically, each of the n TLV fields includes a type subfield, a length subfield, a tunnel identifier subfield, and at least one metric sub-TLV (metric sub-TLV) field. In each of the n TLV fields, the type subfield identifies a type of the TLV field, the length subfield identifies a length of the TLV field, the tunnel identifier subfield is used to carry a tunnel identifier of one tunnel from the first communication apparatus to the second communication apparatus, and the at least one metric sub-TLV field is used to carry performance information of the tunnel. In a specific embodiment, a format of the metric sub-TLV field is shown in FIG. 18. The metric sub-TLV field includes a type subfield, a length subfield, and a value subfield. The type subfield identifies a type of information carried in the value subfield, the length subfield identifies a length of the value subfield, and the value subfield is used to carry the performance information of the tunnel. For example, the performance information of the tunnel includes at least one of available bandwidth, delay, jitter, or packet loss. Formats of metric sub-TLV fields used to carry different types of performance information are shown in FIG. 18. A difference lies in the value of the type subfield of the metric sub-TLV field and the information carried in the value subfield of the metric sub-TLV field.

It should be noted that the BGP tunnel performance attribute shown in FIG. 18 may carry a tunnel identifier. Therefore, in a possible case, the tunnel identifier does not need to be carried by using an MP_REACH_NLRI attribute, a BGP prefix-SID attribute, or the like, and the tunnel identifier and the performance information of the tunnel may be carried by using the BGP tunnel performance attribute shown in FIG. 18. In addition, FIG. 18 is merely an example of the BGP tunnel performance attribute, and the format of the BGP tunnel performance attribute may alternatively be another format. In an example, a correspondence between a field in the BGP tunnel performance attribute and a tunnel identifier in the route X1 may be set, and performance information of a tunnel identified by the tunnel identifier carried in the route X1 (for example, the tunnel identifier carried in the MP_REACH_NLRI attribute or the BGP prefix-SID attribute) is carried in a field corresponding to the tunnel identifier in the BGP tunnel performance attribute. In this way, a tunnel identifier field does not need to be set in the BGP tunnel performance attribute. In another example, an index (index) may be set for the tunnel identifier, an index field is set in the BGP tunnel performance attribute to carry the index of the tunnel identifier, and performance information carried in the BGP tunnel performance attribute is associated with a tunnel identifier carried by the route X1 by using the index. In this way, a tunnel identifier field does not need to be set in the BGP tunnel performance attribute.

The foregoing embodiment is described by using an example in which when the target communication apparatus is the first communication apparatus, the target communication apparatus generates the tunnel identifier of the tunnel from the first communication apparatus to the second communication apparatus, and the target communication apparatus obtains the performance information of the tunnel from the first communication apparatus to the second communication apparatus through tunnel detection, and by using an example in which when the target communication apparatus is the control apparatus, the target communication apparatus receives the tunnel identifier of the tunnel from the first communication apparatus to the second communication apparatus and the performance information of the tunnel from the first communication apparatus to the second communication apparatus that are sent by the first communication apparatus. In some embodiments, the control apparatus may generate the tunnel identifier of the tunnel from the first communication apparatus to the second communication apparatus, and/or the control apparatus detects the performance information of the tunnel from the first communication apparatus to the second communication apparatus. The control apparatus may send the generated tunnel identifier and the detected performance information of the tunnel from the first communication apparatus to the second communication apparatus to the first communication apparatus. This is not limited in embodiments of this application.

In an optional embodiment, the target communication apparatus may further obtain a second tunnel identifier, where the second tunnel identifier identifies a second tunnel from the third communication apparatus to the first communication apparatus, a head node of the second tunnel is the third communication apparatus, and a tail node of the second tunnel is the first communication apparatus. For example, when the target communication apparatus is the control apparatus, or when the target communication apparatus is the first communication apparatus and the target communication apparatus integrates a function of the controller, the target communication apparatus obtains the second tunnel identifier. In a specific embodiment, the second tunnel includes an SD-WAN tunnel, the first tunnel in the foregoing embodiment belongs to the first administrative domain, the second tunnel belongs to the second administrative domain, and the second administrative domain may be an SD-WAN network domain.

In a specific embodiment, the second administrative domain includes a plurality of tunnels from the third communication apparatus to the first communication apparatus, head nodes of the plurality of tunnels are all the third communication apparatus, tail nodes of the plurality of tunnels are all the first communication apparatus, the target communication apparatus determines the second tunnel among the plurality of tunnels, and the target communication apparatus obtains (for example, generates) the second tunnel identifier that identifies the second tunnel. In an embodiment, the target communication apparatus determines the second tunnel among the plurality of tunnels based on performance information of the plurality of tunnels, or the target communication apparatus randomly determines the second tunnel among the plurality of tunnels. For an implementation in which the target communication apparatus determines the second tunnel based on the performance information of the plurality of tunnels, refer to the implementation in which the target communication apparatus determines the first tunnel based on the performance information of the plurality of tunnels from the first communication apparatus to the second communication apparatus. Details are not described herein again.

S802: The target communication apparatus sends the first tunnel identifier to the third communication apparatus.

In a specific embodiment, the target communication apparatus generates a first route based on the first tunnel identifier, and the target communication apparatus sends the first route to the third communication apparatus. The first route includes the first tunnel identifier, an identifier of the head node of the first tunnel, and an identifier of the tail node of the first tunnel.

In an optional embodiment, in S801, the target communication apparatus obtains the plurality of tunnel identifiers that identify the plurality of tunnels from the first communication apparatus to the second communication apparatus, and the target communication apparatus does not perform screening on the plurality of tunnels, that is, the target communication apparatus does not determine the first tunnel among the plurality of tunnels. In S802, the target communication apparatus sends the plurality of tunnel identifiers to the third communication apparatus. The plurality of tunnel identifiers include the first tunnel identifier and the third tunnel identifier, both the head node of the first tunnel and the head node of the third tunnel are the first communication apparatus, and both the tail node of the first tunnel and the tail node of the third tunnel are the second communication apparatus. In a specific embodiment, the head nodes of the plurality of tunnels are all the first communication apparatus, and the tail nodes of the plurality of tunnels are all the second communication apparatus. The target communication apparatus generates the first route based on the plurality of tunnel identifiers. The first route includes the plurality of tunnel identifiers, identifiers (for example, addresses) of the head nodes of the plurality of tunnels, and identifiers (for example, addresses) of the tail nodes of the plurality of tunnels.

In an optional embodiment, the first route includes any one of the following: an SD-WAN route; a BGP-LS route; a BGP labeled route; a BGP FS route; a BGP-RPD route; an OMP route; or a PCEP route. The BGP labeled route includes any one of the following: a BGP LU route; a BGP CT route; or a BGP CAR route. In an embodiment, the first route is the BGP FS route, the OMP route, or the PCEP route, the first route includes a traffic control policy, and the traffic control policy includes the first tunnel identifier. For example, the traffic control policy includes the plurality of tunnel identifiers of the plurality of tunnels from the first communication apparatus to the second communication apparatus, the plurality of tunnels include the first tunnel, and the plurality of tunnel identifiers include the first tunnel identifier. In another embodiment, the first route is the BGP-RPD route, the OMP route, or the PCEP route, the first route includes a routing control policy, and the routing control policy includes the first tunnel identifier. For example, the routing control policy includes the plurality of tunnel identifiers of the plurality of tunnels from the first communication apparatus to the second communication apparatus, the plurality of tunnels include the first tunnel, and the plurality of tunnel identifiers include the first tunnel identifier. In still another embodiment, the first route is the SD-WAN route or the BGP-LS route, the first route includes an MP_REACH_NLRI attribute, and the MP_REACH_NLRI attribute includes the first tunnel identifier. For example, the MP_REACH_NLRI attribute includes the plurality of tunnel identifiers of the plurality of tunnels from the first communication apparatus to the second communication apparatus, the plurality of tunnels include the first tunnel, and the plurality of tunnel identifiers include the first tunnel identifier. In yet another embodiment, the first route is the BGP labeled route, the first route includes an MP_REACH_NLRI attribute or a BGP prefix-SID attribute, and the MP_REACH_NLRI attribute or the BGP prefix-SID attribute includes the first tunnel identifier. For example, the MP_REACH_NLRI attribute or the BGP prefix-SID attribute includes the plurality of tunnel identifiers of the plurality of tunnels from the first communication apparatus to the second communication apparatus, the plurality of tunnels include the first tunnel, and the plurality of tunnel identifiers include the first tunnel identifier. For an implementation in which the first route carries the tunnel identifier, refer to the implementation in which the route X1 carries the tunnel identifier in S801. Details are not described herein again. It should be noted that the first route further includes the identifier (for example, an address) of the head node of the first tunnel and the identifier (for example, an address) of the tail node of the first tunnel. For an implementation in which the first route carries the identifier of the head node of the first tunnel and the identifier of the tail node of the first tunnel, refer to the implementation in which the route X1 carries the identifier of the head node of the first tunnel and the identifier of the tail node of the first tunnel in S801.

In an optional embodiment, the target communication apparatus further sends the performance information of the first tunnel to the third communication apparatus. For example, the target communication apparatus sends the performance information of the plurality of tunnels from the first communication apparatus to the second communication apparatus to the third communication apparatus. In a specific embodiment, the first route includes a BGP tunnel performance attribute, and the BGP tunnel performance attribute includes the performance information of the plurality of tunnels from the first communication apparatus to the second communication apparatus. For a format of the BGP tunnel performance attribute, refer to FIG. 17 and related descriptions thereof. Details are not described herein in embodiments of this application.

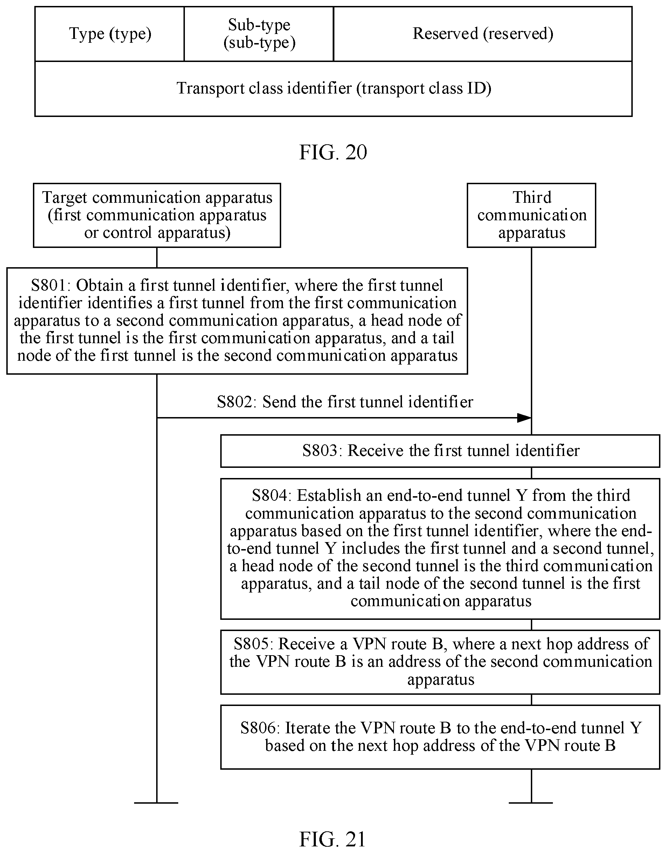

In an optional embodiment, the target communication apparatus further sends the second tunnel identifier to the third communication apparatus, where the second tunnel identifier identifies the second tunnel from the third communication apparatus to the first communication apparatus, the head node of the second tunnel is the third communication apparatus, and the tail node of the second tunnel is the first communication apparatus. For example, when the target communication apparatus is the control apparatus, or when the target communication apparatus is the first communication apparatus and the target communication apparatus integrates a function of the controller, the target communication apparatus sends the second tunnel identifier to the third communication apparatus. In a specific embodiment, the first route generated by the target communication apparatus further includes the second tunnel identifier, and the target communication apparatus sends the second tunnel identifier to the third communication apparatus through the first route. In an example, the first route includes a color extended community attribute, the color extended community attribute includes a color field, and the color field includes the second tunnel identifier. In other words, a color value of the color field is the second tunnel identifier. In another example, the first route includes a "transport class" route target extended community ("transport class" route target extended community) attribute, the "transport class" route target extended community attribute includes a transport class identifier (transport class ID) field, and the transport class identifier field includes the second tunnel identifier. In other words, a value of the transport class identifier field is the second tunnel identifier. In a specific example, the color extended community attribute is shown in FIG. 19, and the color extended community attribute includes a type field, a sub-type field, a flags field, and a color field. The "transport class" route target extended community attribute is shown in FIG. 20. The "transport class" route target extended community attribute includes a type field, a sub-type field, a reserved field, and the transport class identifier field.

S803: The third communication apparatus receives the first tunnel identifier.

In a specific embodiment, the third communication apparatus receives the first route sent by the target communication apparatus, where the first route includes the first tunnel identifier, the identifier of the head node of the first tunnel, and the identifier of the tail node of the first tunnel. The target communication apparatus is the first communication apparatus or the control apparatus.

In an optional embodiment, the third communication apparatus receives the plurality of tunnel identifiers, where the plurality of tunnel identifiers include the first tunnel identifier and the third tunnel identifier, the first tunnel identifier identifies the first tunnel from the first communication apparatus to the second communication apparatus, the third tunnel identifier identifies the third tunnel from the first communication apparatus to the second communication apparatus, both the head node of the first tunnel and the head node of the third tunnel are the first communication apparatus, and both the tail node of the first tunnel and the tail node of the third tunnel are the second communication apparatus. In a specific embodiment, the plurality of tunnel identifiers identify the plurality of tunnels from the first communication apparatus to the second communication apparatus. For example, the plurality of tunnel identifiers are in one-to-one correspondence with the plurality of tunnels, and each tunnel identifier identifies one of the plurality of tunnels. The head nodes of the plurality of tunnels are all the first communication apparatus, and the tail nodes of the plurality of tunnels are all the second communication apparatus. In a specific embodiment, the third communication apparatus receives the first route sent by the target communication apparatus, where the first route includes the plurality of tunnel identifiers.

In an optional embodiment, the third communication apparatus further receives the performance information of the first tunnel sent by the target communication apparatus. For example, the third communication apparatus receives the performance information that is sent by the target communication apparatus and that is of the plurality of tunnels from the first communication apparatus to the second communication apparatus, where the plurality of tunnels include the first tunnel and the third tunnel. In a specific embodiment, the third communication apparatus receives the first route sent by the target communication apparatus, where the first route includes the performance information of the plurality of tunnels from the first communication apparatus to the second communication apparatus.

In an optional embodiment, the third communication apparatus further receives the second tunnel identifier sent by the target communication apparatus, where the second tunnel identifier identifies the second tunnel from the third communication apparatus to the first communication apparatus, the head node of the second tunnel is the third communication apparatus, and the tail node of the second tunnel is the first communication apparatus. In a specific embodiment, the third communication apparatus receives the first route sent by the target communication apparatus, where the first route includes the second tunnel identifier.

S804: The third communication apparatus establishes an end-to-end tunnel Y from the third communication apparatus to the second communication apparatus based on the first tunnel identifier, where the end-to-end tunnel Y includes the first tunnel and the second tunnel, the head node of the second tunnel is the third communication apparatus, and the tail node of the second tunnel is the first communication apparatus.

In an optional embodiment, the third communication apparatus determines, based on the first tunnel identifier and the performance information of the first tunnel, to establish an end-to-end tunnel from the third communication apparatus to the second communication apparatus based on the first tunnel, and then the third communication apparatus establishes the end-to-end tunnel Y based on the first tunnel identifier. In a specific embodiment, the third communication apparatus determines, based on the first tunnel identifier, the performance information of the first tunnel, and the performance information of the third tunnel, to establish the end-to-end tunnel from the third communication apparatus to the second communication apparatus based on the first tunnel. For example, the third communication apparatus determines the first tunnel (or selects the first tunnel from the first tunnel and the third tunnel) based on the performance information of the first tunnel and the performance information of the third tunnel, and the third communication apparatus establishes the end-to-end tunnel Y based on the first tunnel identifier. In a specific embodiment, the third communication apparatus determines the first tunnel among the plurality of tunnels based on the performance information of the plurality of tunnels from the first communication apparatus to the second communication apparatus, and then establishes the end-to-end tunnel Y based on the first tunnel identifier that identifies the first tunnel. For an implementation in which the third communication apparatus determines the first tunnel based on the performance information of the first tunnel and the performance information of the third tunnel and an implementation in which the third communication apparatus determines the first tunnel based on the performance information of the plurality of tunnels, refer to the related descriptions in S801. Details are not described herein again.

In a specific embodiment, the third communication apparatus establishes the end-to-end tunnel Y from the third communication apparatus to the second communication apparatus based on the first tunnel identifier and the second tunnel identifier, where the second tunnel identifier identifies the second tunnel from the third communication apparatus to the second communication apparatus. For example, the third communication apparatus establishes a tunnel forwarding entry 1 based on the first tunnel identifier and the second tunnel identifier, to establish the end-to-end tunnel Y. The tunnel forwarding entry 1 includes information about the end-to-end tunnel Y, the information about the end-to-end tunnel Y includes the first tunnel identifier and the second tunnel identifier, and in the information about the end-to-end tunnel Y, the first tunnel identifier is orchestrated after the second tunnel identifier, so that the first tunnel identified by the first tunnel identifier is orchestrated after the second tunnel identified by the second tunnel identifier. For example, the second tunnel is the third communication apparatus -> the first communication apparatus, the first tunnel is the first communication apparatus -> the second communication apparatus, and the end-to-end tunnel Y is the third communication apparatus -> the first communication apparatus -> the second communication apparatus. The information about the end-to-end tunnel Y is the second tunnel identifier -> the first tunnel identifier. In an optional embodiment, the information about the end-to-end tunnel Y is next hop information of the tunnel forwarding entry 1.

In a specific embodiment, the third communication apparatus determines that the tail node of the second tunnel is the first communication apparatus, and the third communication apparatus determines, based on the first route, that the head node of the first tunnel (the first route includes the identifier of the head node of the first tunnel) is the first communication apparatus. The third communication apparatus determines, based on the tail node of the second tunnel being the first communication apparatus and the head node of the first tunnel being the first communication apparatus, to establish the end-to-end tunnel from the third communication apparatus to the second communication apparatus based on the first tunnel identifier and the second tunnel identifier. The third communication apparatus determines to orchestrate the first tunnel identifier after the second tunnel, to orchestrate the first tunnel after the second tunnel and establish the end-to-end tunnel Y from the third communication apparatus to the second communication apparatus.

In an optional embodiment, the target communication apparatus sends the first tunnel identifier and the second tunnel identifier to the third communication apparatus through the first route, and the third communication apparatus obtains the first tunnel identifier and the second tunnel identifier from the first route, and then establishes the end-to-end tunnel Y from the third communication apparatus to the second communication apparatus based on the first tunnel identifier and the second tunnel identifier. In a specific embodiment, the third communication apparatus obtains the second tunnel identifier of the second tunnel from the third communication apparatus to the first communication apparatus, the plurality of tunnel identifiers of the plurality of tunnels from the first communication apparatus to the second communication apparatus, and the performance information of the plurality of tunnels from the first route, the third communication apparatus determines the first tunnel among the plurality of tunnels based on the performance information of the plurality of tunnels, and then the third communication apparatus establishes the end-to-end tunnel Y based on the second tunnel identifier and the first tunnel identifier that identifies the first tunnel.

In conclusion, in the technical solutions provided in embodiments of this application, because the first communication apparatus notifies the third communication apparatus of the first tunnel identifier that identifies the first tunnel from the first communication apparatus to the second communication apparatus, the first communication apparatus implements a function of providing the third communication apparatus with the tunnel from the first communication apparatus to the second communication apparatus. Because the third communication apparatus establishes the end-to-end tunnel from the third communication apparatus to the second communication apparatus based on the first tunnel identifier notified by the first communication apparatus, the third communication apparatus establishes the end-to-end tunnel from the third communication apparatus to the second communication apparatus. For example, the first communication apparatus, the second communication apparatus, and the first tunnel all belong to the first administrative domain, and the third communication apparatus belongs to the second administrative domain. Therefore, in embodiments of this application, the end-to-end tunnel from the communication apparatus in the second administrative domain to the communication apparatus in the first administrative domain is established.

After the third communication apparatus establishes the end-to-end tunnel Y from the third communication apparatus to the second communication apparatus, the third communication apparatus may recurse a VPN route advertised by the second communication apparatus to the end-to-end tunnel Y. In an optional embodiment, FIG. 21 is a flowchart of another network interconnection method according to an embodiment of this application. Based on FIG. 8, the method shown in FIG. 21 further includes the following steps S805 and S806.

S805: The third communication apparatus receives a VPN route B, where a next hop address of the VPN route B is an address of the second communication apparatus.

The VPN route B is a VPN route advertised by the second communication apparatus, and the VPN route B includes a VPN SID allocated by the second communication apparatus. The VPN route B is advertised by the second communication apparatus based on a VPN address family. For example, the VPN route B is a VPNv4 route advertised by the second communication apparatus based on a VPNv4 address family, a VPNv6 route advertised based on a VPNv6 address family, or an EVPN route advertised based on an EVPN address family. The VPN route B and the VPN route A described in the foregoing embodiment may be a same VPN route. The VPN route B may be forwarded by other communication apparatuses to the third communication apparatus, and in a process in which the other communication apparatuses forward the VPN route B, the next hop address of the VPN route B is not modified.

The second communication apparatus advertises the VPN route B based on a learned private network route. In a specific embodiment, the second communication apparatus receives, through a first interface, a private network route advertised by the fourth communication apparatus; the second communication apparatus allocates a VPN SID to the private network route; the second communication apparatus binds the VPN SID to the first interface of the second communication apparatus; the second communication apparatus generates the VPN route B based on the private network route; and the second communication apparatus advertises the VPN route B. For example, the fourth communication apparatus belongs to the third administrative domain, and the first administrative domain and the third administrative domain are interconnected through the second communication apparatus. For example, the second communication apparatus is an ingress node of the first administrative domain, and the fourth communication apparatus is the egress node of the third administrative domain.

S806: The third communication apparatus recurses the VPN route B to the end-to-end tunnel Y based on the next hop address of the VPN route B.

In a specific embodiment, the third communication apparatus searches the third communication apparatus for a tunnel whose head node is the third communication apparatus and whose tail node address matches the next hop address of the VPN route B, and the third communication apparatus may find the end-to-end tunnel Y. That the third communication apparatus finds the end-to-end tunnel Y means that the third communication apparatus finds the tunnel forwarding entry 1 established in S804, and the third communication apparatus records, in the tunnel forwarding entry 1, the VPN SID (for example, the VPN SID is referred to as a VPN SID 1) in the VPN route B. In a specific embodiment, the VPN SID 1 is a destination address of the tunnel forwarding entry 1, that is, a matching entry of the tunnel forwarding entry 1. The tunnel forwarding entry 1 is shown in Table 4.

**Table 4**

| Destination address | Next hop information |
|---|---|
| VPN SID 1 | Second tunnel identifier -> First tunnel identifier |

The tunnel forwarding entry 1 shown in Table 4 is used for a packet sent by the third communication apparatus to the second communication apparatus through the end-to-end tunnel Y.

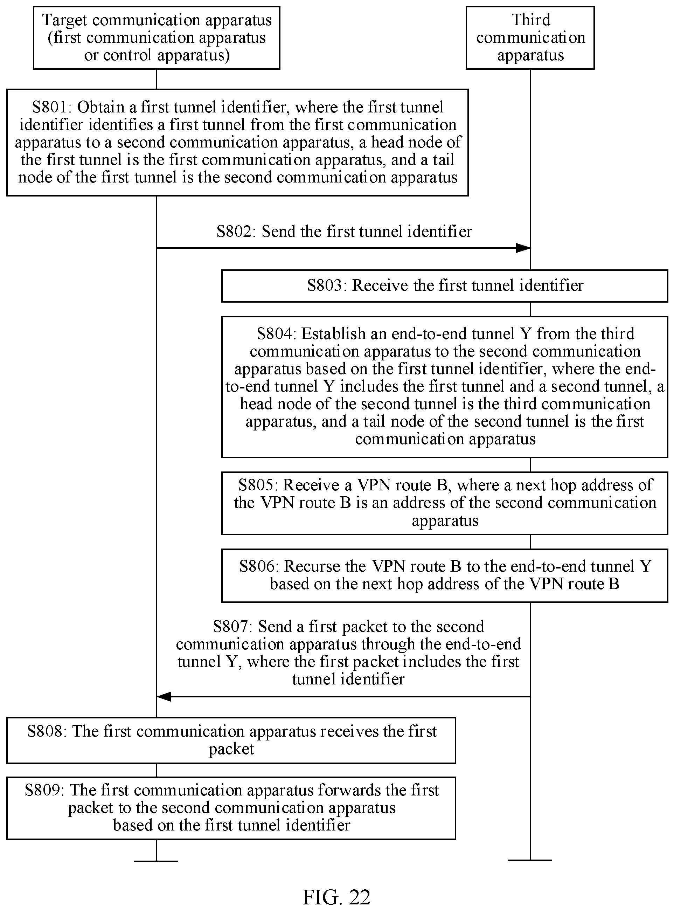

After the third communication apparatus establishes the end-to-end tunnel Y from the third communication apparatus to the second communication apparatus, the third communication apparatus may send the packet to the second communication apparatus through the end-to-end tunnel Y. In an optional embodiment, FIG. 22 is a flowchart of still another network interconnection method according to an embodiment of this application. Based on FIG. 21, the method shown in FIG. 22 further includes the following steps S807 to S809.

S807: The third communication apparatus sends a first packet to the second communication apparatus through the end-to-end tunnel Y, where the first packet includes the first tunnel identifier.

In an optional embodiment, the third communication apparatus obtains the information about the end-to-end tunnel Y. The third communication apparatus generates the first packet based on the information about the end-to-end tunnel Y, where a destination address of the first packet is the address of the second communication apparatus, and the first packet includes the first tunnel identifier. The third communication apparatus sends the first packet to the first communication apparatus based on the destination address of the first packet through the second tunnel included in the end-to-end tunnel Y.

In a specific embodiment, the third communication apparatus receives an original packet. The third communication apparatus searches a forwarding table of the third communication apparatus based on a destination address of the original packet, and determines that the destination address of the original packet matches the destination address (for example, the VPN SID 1) of the tunnel forwarding entry 1. Then, the third communication apparatus determines the information about the end-to-end tunnel Y based on the tunnel forwarding entry 1, and the third communication apparatus performs tunnel encapsulation on the original packet based on the information about the end-to-end tunnel Y, to obtain the first packet. In a specific embodiment, the third communication apparatus determines, based on the information about the end-to-end tunnel Y, that the end-to-end tunnel Y includes the second tunnel from the third communication apparatus to the first communication apparatus and the first tunnel from the first communication apparatus to the second communication apparatus. The third communication apparatus encapsulates, in the original packet, the first tunnel identifier that identifies the first tunnel, and the third communication apparatus performs second tunnel encapsulation on the original packet based on the second tunnel identifier that identifies the second tunnel, to obtain the first packet. The first packet includes the first tunnel identifier and encapsulation information of the second tunnel, and in the first packet, tunnel information of the second tunnel is located outside the first tunnel identifier. For example, the third communication apparatus sequentially encapsulates the first tunnel identifier and the tunnel information of the second tunnel in the original packet to obtain the first packet.

In a specific embodiment, the third communication apparatus performs tunnel encapsulation on the original packet based on the tunnel forwarding entry 1 to obtain the first packet. The first packet includes the VPN SID 1, the first tunnel identifier, and the encapsulation information of the second tunnel. In the first packet, the first tunnel identifier is located outside the VPN SID 1, and the tunnel information of the second tunnel is located outside the first tunnel identifier. In other words, the VPN SID 1, the first tunnel identifier, and the tunnel information of the second tunnel are sequentially distributed from the inside out. For example, the third communication apparatus sequentially encapsulates the VPN SID 1, the first tunnel identifier, and the tunnel information of the second tunnel in the original packet to obtain the first packet.

In an optional embodiment, the second tunnel is an SD-WAN tunnel, and the encapsulation information of the second tunnel is SD-WAN tunnel information.

In an optional embodiment, the original packet comes from a user equipment (for example, a host) that accesses the second administrative domain.

S808: The first communication apparatus receives the first packet.

The first communication apparatus is an intermediate node of the end-to-end tunnel Y, and the first communication apparatus may receive the first packet sent by the third communication apparatus to the second communication apparatus through the end-to-end tunnel Y.

In a specific embodiment, the first communication apparatus receives the first packet sent by the third communication apparatus through the second tunnel included in the end-to-end tunnel Y.

S809: The first communication apparatus forwards the first packet to the second communication apparatus based on the first tunnel identifier in the first packet.

The first packet received by the first communication apparatus includes the tunnel information of the second tunnel and the first tunnel identifier, and may further include the VPN SID 1. The first communication apparatus decapsulates the tunnel information of the second tunnel in the first packet to determine the first tunnel identifier in the first packet. The first communication apparatus determines the first tunnel based on the first tunnel identifier. The first communication apparatus forwards the first packet to the second communication apparatus through the first tunnel.

In an optional embodiment, the first packet includes the VPN SID 1. After the second communication apparatus receives the first packet, the second communication apparatus decapsulates the first tunnel identifier in the first packet to determine the VPN SID 1 in the first packet, and the second communication apparatus forwards the first packet based on the VPN SID 1. In a specific embodiment, the VPN SID 1 is bound to the first interface of the second communication apparatus, the second communication apparatus determines the first interface of the second communication apparatus based on the VPN SID 1, and the second communication apparatus forwards the first packet to the fourth communication apparatus through the first interface.

It should be noted that, after the first communication apparatus decapsulates the tunnel information of the second tunnel in the first packet, the tunnel information of the second tunnel in the first packet is stripped. Therefore, a first packet after the decapsulation by the first communication apparatus does not include the tunnel information of the second tunnel, and that the first communication apparatus forwards the first packet to the second communication apparatus based on the first tunnel identifier in the first packet means that the first communication apparatus forwards the first packet after the decapsulation to the second communication apparatus based on the first tunnel identifier in the first packet after the decapsulation. After the second communication apparatus decapsulates the first tunnel identifier in the first packet, the first tunnel identifier in the first packet is stripped. Therefore, a first packet after the decapsulation by the second communication apparatus does not include the first tunnel identifier, and that the second communication apparatus forwards the first packet based on the VPN SID 1 in the first packet means that the second communication apparatus forwards the first packet after the decapsulation based on the VPN SID 1 in the first packet after the decapsulation. For brevity of description, the packets are collectively referred to as the first packet in embodiments of this application.

In conclusion, in the technical solutions provided in embodiments of this application, the third communication apparatus may establish the end-to-end tunnel from the third communication apparatus to the second communication apparatus based on the first tunnel identifier notified by the first communication apparatus, and send the packet to the second communication apparatus through the end-to-end tunnel. Therefore, end-to-end communication from the third communication apparatus to the second communication apparatus can be implemented.

To facilitate understanding of the technical solutions in embodiments of this application, the following describes the technical solutions in embodiments of this application by using four examples with reference to the accompanying drawings.

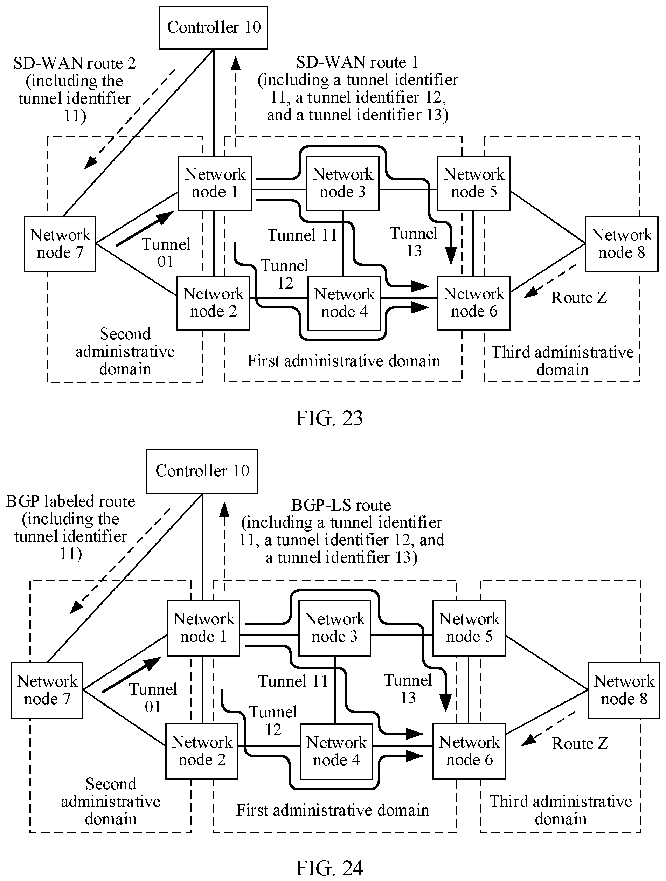

**Example 1:** FIG. 23 is a diagram of a network interconnection method according to an embodiment of this application.

The network node 6 receives, through an interface 1, a route Z advertised by the network node 8. The network node 6 allocates a VPN SID 1 to the route Z, and binds the VPN SID 1 to the interface 1 of the network node 6. The network node 6 generates a VPN route 1 (not shown in FIG. 23) and advertises the VPN route 1. The VPN route 1 includes the VPN SID 1, and a next hop address of the VPN route 1 is an address of the network node 6.

After the network node 1 receives the VPN route 1, the network node 1 determines tunnels 11 to 13 from the network node 1 to the network node 6 based on the next hop address of the VPN route 1. Head nodes of the tunnels 11 to 13 are all the network node 1, and tail nodes of the tunnels 11 to 13 are all the network node 6. The network node 1 respectively generates tunnel identifiers for the tunnels 11 to 13. An example in which the network node 1 generates a tunnel identifier 11 for the tunnel 11, the network node 1 generates a tunnel identifier 12 for the tunnel 12, and the network node 1 generates a tunnel identifier 13 for the tunnel 13 is used for description.

The network node 1 generates an SD-WAN route 1, where the SD-WAN route 1 includes the tunnel identifiers 11 to 13 (the SD-WAN route 1 may further include performance information of the tunnels 11 to 13), identifiers of the head nodes of the tunnels 11 to 13, and identifiers of the tail nodes of the tunnels 11 to 13. For example, a local endpoint address of the SD-WAN route 1 is an address of the network node 1 (the identifiers of the head nodes of the tunnels 11 to 13), and a remote endpoint address of the SD-WAN route 1 is the address of the network node 6 (the identifiers of the tail nodes of the tunnels 11 to 13). The network node 1 sends the SD-WAN route 1 to the controller 10.

After the controller 10 receives the SD-WAN route 1, the controller 10 obtains the tunnel identifiers 11 to 13 in the SD-WAN route 1, and the controller 10 determines the tunnel 11 in the tunnels 11 to 13 as the first tunnel. The controller 10 generates an SD-WAN route 2, where the SD-WAN route 2 includes the tunnel identifier 11, the identifier of the head node of the tunnel 11, and the identifier of the tail node of the tunnel 11. For example, a local endpoint address of the SD-WAN route 2 is an address of the network node 1 (the identifier of the head node of the tunnel 11), and a remote endpoint address of the SD-WAN route 2 is the address of the network node 6 (the identifiers of the tail nodes of the tunnels 11 to 13). The controller 10 sends the SD-WAN route 2 to the network node 7.

After the network node 7 receives the SD-WAN route 2, the network node 7 obtains the tunnel identifier 11 in the SD-WAN route 2. The network node 7 determines a tunnel 01 from the network node 7 to the network node 1. The network node 7 establishes an end-to-end tunnel from the network node 7 to the network node 6 based on the tunnel identifier 11 and a tunnel identifier 01 of the tunnel 01 (for ease of description, the end-to-end tunnel is referred to as an end-to-end tunnel 011). In a specific embodiment, the network node 7 establishes a tunnel forwarding entry 1 based on the tunnel identifier 11 and the tunnel identifier 01 to establish the end-to-end tunnel 011. Next hop information of the tunnel forwarding entry 1 is information about the end-to-end tunnel 011: the tunnel identifier 01 -> the tunnel identifier 11.

After the network node 7 receives the VPN route 1, the network node 7 finds the end-to-end tunnel 011 based on the next hop address of the VPN route 1, the network node 7 recurses the VPN route 1 to the end-to-end tunnel 011, and the network node 7 records the VPN SID 1 in the VPN route 1 in the tunnel forwarding entry 1. A destination address of the tunnel forwarding entry 1 is the VPN SID 1.

After the network node 7 receives a packet whose destination address matches the VPN SID 1 in the tunnel forwarding entry 1, the network node 7 determines the end-to-end tunnel 011 based on the next hop information of the tunnel forwarding entry 1. The network node 7 encapsulates tunnel information of the end-to-end tunnel 011 for the packet. The network node 7 forwards the packet to the network node 1 based on tunnel information of the tunnel 01 in the tunnel information of the end-to-end tunnel 011. After receiving the packet, the network node 1 decapsulates the tunnel information of the tunnel 01 in the packet, and the network node 1 forwards the packet to the network node 6 through the tunnel 11 based on the tunnel identifier 11 in the packet. After receiving the packet, the network node 6 decapsulates the tunnel identifier 11 in the packet. The network node 6 determines the interface 1 of the network node 6 based on the VPN SID 1 in the packet, and forwards the packet to the network node 8 through the interface 1.

**Example 2:** FIG. 24 is a diagram of another network interconnection method according to an embodiment of this application.

A procedure of the method shown in FIG. 24 is basically the same as the procedure of the method shown in FIG. 23. A difference lies in that in the method shown in FIG. 24, the network node 1 sends tunnel identifiers 11 to 13 to the controller 10 through a BGP-LS route, and after the controller 10 selects a tunnel 11 from tunnels 11 to 13, the controller 10 sends the tunnel identifier 11 to the network node 1 through a BGP labeled route.

The BGP labeled route may be a BGP LU route, a BGP CT route, or a BGP CAR route.

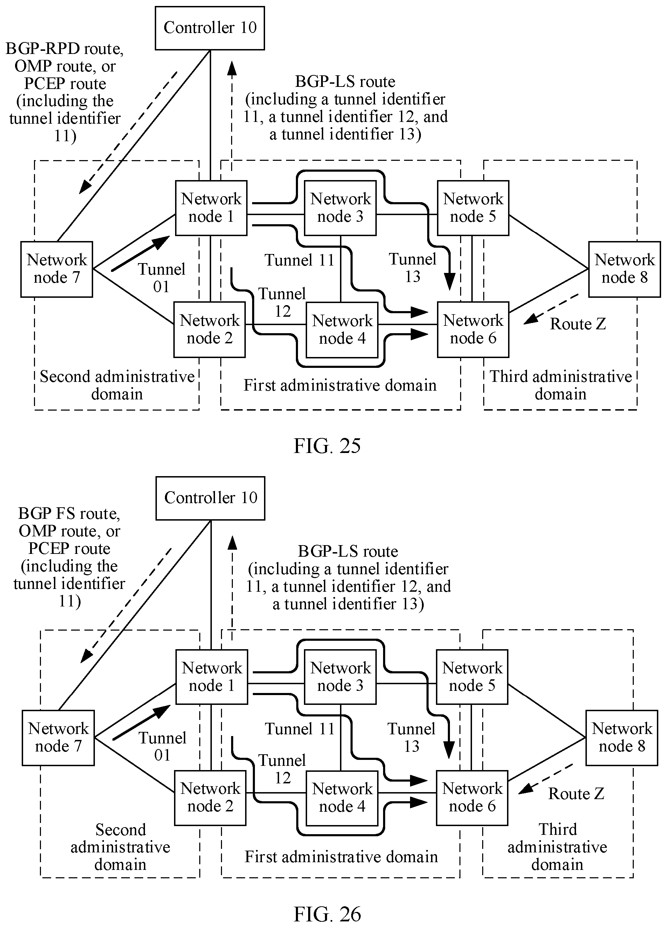

**Example 3:** FIG. 25 is a diagram of still another network interconnection method according to an embodiment of this application.

A procedure of the method shown in FIG. 25 is basically the same as the procedure of the method shown in FIG. 23. A difference lies in that in the method shown in FIG. 25, the network node 1 sends tunnel identifiers 11 to 13 to the controller 10 through a BGP-LS route, and after the controller 10 selects a tunnel 11 from tunnels 11 to 13, the controller 10 sends the tunnel identifier 11 to the network node 1 through a BGP-RPD route, an OMP route, or a PCEP route.

**Example 4:** FIG. 26 is a diagram of yet another network interconnection method according to an embodiment of this application.

A procedure of the method shown in FIG. 26 is basically the same as the procedure of the method shown in FIG. 23. A difference lies in that in the method shown in FIG. 26, the network node 1 sends tunnel identifiers 11 to 13 to the controller 10 through a BGP-LS route, and after the controller 10 selects a tunnel 11 from tunnels 11 to 13, the controller 10 sends the tunnel identifier 11 to the network node 1 through a BGP FS route, an OMP route, or a PCEP route.

It should be noted that the foregoing four examples are described by using an example in which the controller 10 determines the first tunnel (that is, the tunnel 11) in the tunnels 11 to 13. In some embodiments, the network node 1 determines the first tunnel in the tunnels 11 to 13, and the SD-WAN route or the BGP-LS route sent by the network node 1 to the controller 10 includes a tunnel identifier of the first tunnel (for example, the tunnel 11), but does not need to include the tunnel identifiers of the tunnels 12 and 13. In some other embodiments, the network node 7 determines the first tunnel in the tunnels 11 to 13. The SD-WAN route or the BGP-LS route sent by the network node 1 to the controller 10 includes the tunnel identifiers of the tunnels 11 to 13. The SD-WAN route, the BGP labeled route, the BGP FS route, the BGP-RPD route, the OMP route, or the PCEP route sent by the controller 10 to the network node 7 includes the tunnel identifiers of the tunnels 11 to 13.

In addition, in the foregoing embodiment, the route used to transit the tunnel identifier between the network node 1 and the network node 7 is merely used as an example of embodiments of this application. Alternatively, another route may be used to transit the tunnel identifier between the network node 1 and the network node 7. This is not limited in embodiments of this application.

In addition, S801 to S809 in the foregoing method embodiments are merely used as step numbers of the method embodiments of this application, and are not used to limit an execution sequence of the steps. The sequence of the steps in the method embodiments of this application may be properly adjusted, or the steps may be added or deleted based on a situation. For example, step S805 may be performed before step S801. Any variation method readily figured out by a person skilled in the art within the technical scope disclosed in this application shall fall within the protection scope of this application. Therefore, details are not described.

It should be noted that, in embodiments of this application, "the tunnel from the first communication apparatus to the second communication apparatus" means that the head node of the tunnel is the first communication apparatus, and the tail node of the tunnel is the second communication apparatus; and "the tunnel from the third communication apparatus to the second communication apparatus" means that the head node of the tunnel is the third communication apparatus, and the tail node of the tunnel is the second communication apparatus. Unless otherwise specified, other similar descriptions have the same meaning.

The foregoing describes the method embodiments of this application. The following describes apparatus embodiments of this application. The apparatus in this application is configured to perform the method in this application. For details that are not disclosed in the apparatus embodiments, refer to the method embodiments.

An embodiment of this application provides a communication apparatus. The communication apparatus includes at least one functional module, and the at least one functional module is configured to perform all or some of the steps of the network interconnection method provided in the foregoing method embodiments (for example, the method embodiments shown in FIG. 8, FIG. 21, and FIG. 22).

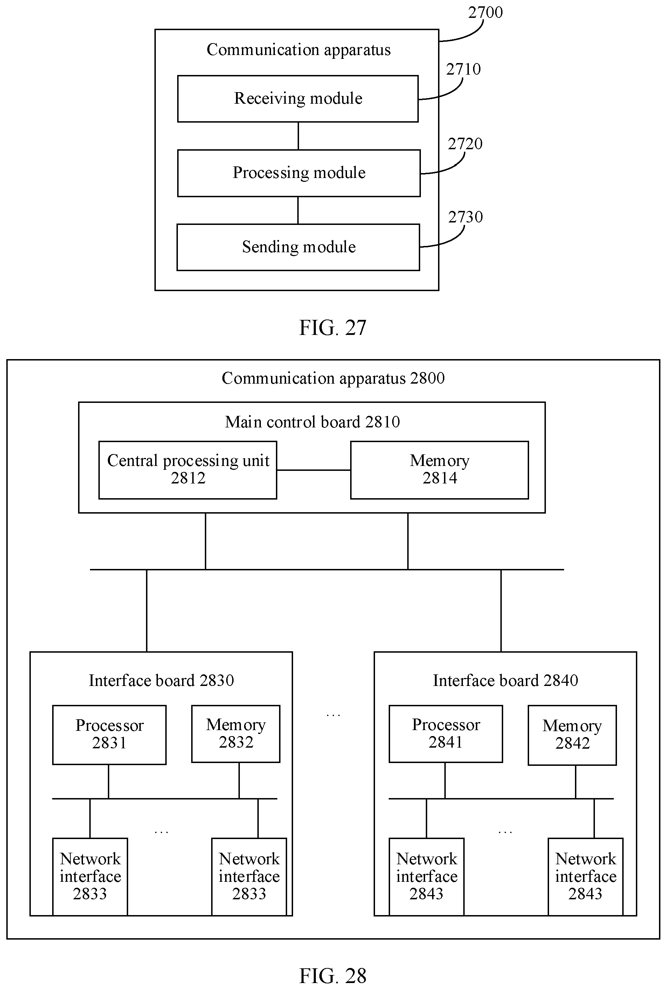

FIG. 27 is a diagram of a communication apparatus 2700 according to an embodiment of this application. The communication apparatus 2700 may be the third communication apparatus, the first communication apparatus, or the control apparatus (for example, the controller) described in the foregoing method embodiments. In the communication apparatus 2700, the at least one functional module includes a receiving module 2710, a processing module 2720, and a sending module 2730.

**In an embodiment, the communication apparatus 2700 is the third communication apparatus described in the foregoing method embodiment.**

The receiving module 2710 is configured to receive a first tunnel identifier, where the first tunnel identifier identifies a first tunnel from a first communication apparatus to a second communication apparatus, a head node of the first tunnel is the first communication apparatus, and a tail node of the first tunnel is the second communication apparatus.

The processing module 2720 is configured to establish an end-to-end tunnel from the third communication apparatus to the second communication apparatus based on the first tunnel identifier, where the end-to-end tunnel includes the first tunnel and a second tunnel, a head node of the second tunnel is the third communication apparatus, and a tail node of the second tunnel is the first communication apparatus.

In a specific implementation, the processing module 2720 is configured to determine, based on the first tunnel identifier and performance information of the first tunnel, to establish the end-to-end tunnel from the third communication apparatus to the second communication apparatus based on the first tunnel.

In a specific implementation, the receiving module 2710 is further configured to receive the performance information of the first tunnel.

In a specific implementation, the performance information of the first tunnel includes at least one of available bandwidth, delay, jitter, or packet loss.

In a specific implementation, the processing module 2720 is configured to establish the end-to-end tunnel from the third communication apparatus to the second communication apparatus based on the first tunnel identifier and a second tunnel identifier, where the second tunnel identifier identifies the second tunnel.

In a specific implementation, the receiving module 2710 is further configured to receive the second tunnel identifier.

In a specific implementation, the receiving module 2710 is configured to receive the second tunnel identifier sent by the controller.

In a specific implementation, the receiving module 2710 is configured to receive a plurality of tunnel identifiers, where the plurality of tunnel identifiers include the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus.

In a specific implementation, the receiving module 2710 is further configured to receive a VPN route, where a next hop address of the VPN route is an address of the second communication apparatus; and the processing module 2720 is further configured to recurse the VPN route to the end-to-end tunnel based on the next hop address of the VPN route.

In a specific implementation, the receiving module 2710 is configured to receive a first route, where the first route includes the first tunnel identifier, an identifier of the head node of the first tunnel, and an identifier of the tail node of the first tunnel. The first route may further include the performance information of the first tunnel, the second tunnel identifier, and the like.

In a specific implementation, the first route includes any one of the following: an SD-WAN route; a BGP-LS route; a BGP labeled route; a BGP FS route; a BGP-RPD route; an OMP route; or a PCEP route.

In a specific implementation, the first route is the BGP FS route, the OMP route, or the PCEP route, the first route includes a traffic control policy, and the traffic control policy includes the first tunnel identifier; or the first route is the BGP-RPD route, the OMP route, or the PCEP route, the first route includes a routing control policy, and the routing control policy includes the first tunnel identifier; or the first route is the SD-WAN route or the BGP-LS route, the first route includes an MP_REACH_NLRI attribute, and the MP_REACH_NLRI attribute includes the first tunnel identifier; or the first route is the BGP labeled route, the first route includes an MP_REACH_NLRI attribute or a BGP prefix-SID attribute, and the MP_REACH_NLRI attribute or the BGP prefix-SID attribute includes the first tunnel identifier.

In a specific implementation, the BGP labeled route includes any one of a BGP LU route, a BGP CT route, or a BGP CAR route.

In a specific implementation, the first route is the BGP LU route or the BGP CT route, the first route includes the MP_REACH_NLRI attribute or the BGP prefix-SID attribute, and the MP_REACH_NLRI attribute or the BGP prefix-SID attribute includes the first tunnel identifier; or the first route is the BGP CAR route, the first route includes the MP_REACH_NLRI attribute, and the MP_REACH_NLRI attribute includes the first tunnel identifier.

In a specific implementation, the first tunnel belongs to a first administrative domain, and the second tunnel belongs to a second administrative domain.

In a specific implementation, the first tunnel includes any one of the following: an SR-MPLS tunnel; an SRv6 TE tunnel; a GRE tunnel; an MPLS LDP LSP tunnel; a BGP LSP tunnel; or an RSVP-TE LSP tunnel.

In a specific implementation, the second tunnel includes an SD-WAN tunnel.

In a specific implementation, the sending module 2730 is configured to send a first packet to the second communication apparatus through the end-to-end tunnel, where the first packet includes the first tunnel identifier.

**In another embodiment, the communication apparatus 2700 is the first communication apparatus or the control apparatus (for example, the controller) described in the foregoing method embodiment.**

The processing module 2720 is configured to obtain a first tunnel identifier, where the first tunnel identifier identifies a first tunnel from the first communication apparatus to a second communication apparatus, a head node of the first tunnel is the first communication apparatus, and a tail node of the first tunnel is the second communication apparatus.

The sending module 2730 is configured to send the first tunnel identifier to a third communication apparatus.

In a specific implementation, the sending module 2730 is further configured to send performance information of the first tunnel to the third communication apparatus.

In a specific implementation, the performance information of the first tunnel includes at least one of available bandwidth, delay, jitter, or packet loss.

In a specific implementation, the sending module 2730 is further configured to send a second tunnel identifier to the third communication apparatus, where the second tunnel identifier identifies a second tunnel from the third communication apparatus to the first communication apparatus, a head node of the second tunnel is the third communication apparatus, and a tail node of the second tunnel is the first communication apparatus.

In a specific implementation, the processing module 2720 is configured to: obtain a plurality of tunnel identifiers, where the plurality of tunnel identifiers include the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus; determine the first tunnel based on the performance information of the first tunnel and performance information of the third tunnel; and obtain the first tunnel identifier that identifies the first tunnel.

In a specific implementation, the processing module 2720 is configured to obtain a plurality of tunnel identifiers, where the plurality of tunnel identifiers include the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus; and the sending module 2730 is configured to send the plurality of tunnel identifiers to the third communication apparatus.

In a specific implementation, the sending module 2730 is configured to send a first route to the third communication apparatus, where the first route includes the first tunnel identifier, an identifier of the head node of the first tunnel, and an identifier of the tail node of the first tunnel. The first route may further include the performance information of the first tunnel, the second tunnel identifier, and the like.

In a specific implementation, the first route includes any one of the following: an SD-WAN route; a BGP-LS route; a BGP labeled route; a BGP FS route; a BGP-RPD route; an OMP route; or a PCEP route.

In a specific implementation, the first route is the BGP FS route, the OMP route, or the PCEP route, the first route includes a traffic control policy, and the traffic control policy includes the first tunnel identifier; or the first route is the BGP-RPD route, the OMP route, or the PCEP route, the first route includes a routing control policy, and the routing control policy includes the first tunnel identifier; or the first route is the SD-WAN route or the BGP-LS route, the first route includes an MP_REACH_NLRI attribute, and the MP_REACH_NLRI attribute includes the first tunnel identifier; or the first route is the BGP labeled route, the first route includes an MP_REACH_NLRI attribute or a BGP prefix-SID attribute, and the MP_REACH_NLRI attribute or the BGP prefix-SID attribute includes the first tunnel identifier.

In a specific implementation, the BGP labeled route includes any one of a BGP LU route, a BGP CT route, or a BGP CAR route.

In a specific implementation, the first route is the BGP LU route or the BGP CT route, the first route includes the MP_REACH_NLRI attribute or the BGP prefix-SID attribute, and the MP_REACH_NLRI attribute or the BGP prefix-SID attribute includes the first tunnel identifier; or the first route is the BGP CAR route, the first route includes the MP_REACH_NLRI attribute, and the MP_REACH_NLRI attribute includes the first tunnel identifier.

In a specific implementation, the receiving module 2710 is configured to receive a VPN route, where a next hop address of the VPN route is an address of the second communication apparatus; and the sending module 2730 is further configured to send the VPN route to the third communication apparatus.

In a specific implementation, the first tunnel belongs to a first administrative domain, and the second tunnel belongs to a second administrative domain.

In a specific implementation, the first tunnel includes any one of the following: an SR-MPLS tunnel; an SRv6 TE tunnel; a GRE tunnel; an MPLS LDP LSP tunnel; a BGP LSP tunnel; or an RSVP-TE LSP tunnel.

In a specific implementation, the second tunnel includes an SD-WAN tunnel.

In a specific implementation, the communication apparatus 2700 is the first communication apparatus, and the receiving module 2710 is further configured to receive a first packet, where the first packet includes the first tunnel identifier; and the sending module 2730 is further configured to forward the first packet to the second communication apparatus based on the first tunnel identifier.

For function implementation of the receiving module 2710, refer to steps S803, S805, and S808 in FIG. 8, FIG. 21, or FIG. 22. For function implementation of the processing module 2720, refer to steps S801, S804, and S806 in FIG. 8, FIG. 21, or FIG. 22. For function implementation of the sending module 2730, refer to steps S802, S807, and S809 in FIG. 8, FIG. 21, or FIG. 22. Details are not described herein again.

The communication apparatus provided in embodiments of this application may alternatively be implemented by an application-specific integrated circuit (application-specific integrated circuit, ASIC) or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. Alternatively, the method provided in the foregoing method embodiments may be implemented by using software. When the method provided in the foregoing method embodiments is implemented by using software, each functional module in the foregoing communication apparatus may be a software module.

An embodiment of this application provides a communication apparatus, including a memory and a processor. The memory is configured to store a computer program. The processor is configured to execute the computer program stored in the memory to implement the network interconnection method provided in the method embodiment shown in FIG. 8, FIG. 21, or FIG. 22. The communication apparatus may be the third communication apparatus, the first communication apparatus, or the control apparatus (for example, the controller) described in the foregoing method embodiments.

In an example, FIG. 28 is a diagram of a communication apparatus 2800 according to an embodiment of this application. The communication apparatus 2800 is a network node or a functional component in the network node, and the network node may be a switch, a router, or the like. The communication apparatus 2800 may implement the method embodiment shown in FIG. 8, FIG. 21, or FIG. 22. As shown in FIG. 28, the communication apparatus 2800 includes a main control board 2810, an interface board 2830, and an interface board 2840. When the communication apparatus 2800 includes a plurality of interface boards (the interface boards are also referred to as line cards or service boards), the communication apparatus 2800 further includes a switching board (not shown in FIG. 28), and the switching board is configured to complete data exchange between interface boards.

The main control board 2810 is configured to complete functions such as system management, device maintenance, and protocol processing. The interface board 2830 and the interface board 2840 are configured to provide service interfaces and implement service forwarding. These service interfaces are, for example, POS interfaces, gigabit Ethernet (gigabit Ethernet, GE) interfaces, or asynchronous transfer mode (asynchronous transfer mode, ATM) interfaces. The main control board 2810 mainly includes three types of functional units: a system management and control unit, a system clock unit, and a system maintenance unit. The main control board 2810, the interface board 2830, and the interface board 2840 are connected to a system backplane through a system bus to implement interworking. The interface board 2830 includes one or more processors 2831. The processor 2831 is configured to: control and manage the interface board 2830, and communicate with a central processing unit 2812 on the main control board 2810. A memory 2832 on the interface board 2830 is configured to store a forwarding entry. The interface board 2830 includes one or more network interfaces 2833 to implement receiving and sending. The main control board 2810 further includes a memory 2814. The memory 2814 is configured to store system management information, a protocol, and the like. This is not limited in embodiments of this application. As shown in FIG. 28, this embodiment includes a plurality of interface boards and uses a distributed forwarding mechanism. In this mechanism, an operation on the interface board 2840 is basically similar to an operation on the interface board 2830. For example, the interface board 2840 includes one or more network interfaces 2843 to implement receiving and sending, the interface board 2840 includes a memory 2842 to store a forwarding entry, and the interface board 2840 includes a processor 2841 to control and manage the interface board 2840 and communicate with a central processing unit 2812 on the main control board 2810.

The processor 2831 in the interface board 2830 and/or the processor 2841 in the interface board 2840 may be dedicated hardware or a chip, for example, a network processor or an application-specific integrated circuit, to implement the foregoing functions. This implementation is usually referred to as a manner of using dedicated hardware or a chip for processing on a forwarding plane. In another implementation, the processor 2831 in the interface board 2830 and/or the processor 2841 in the interface board 2840 may alternatively use a general-purpose processor, for example, a general-purpose central processing unit (central processing unit, CPU).

There may be one or more main control boards. When there are a plurality of main control boards, the main control boards may include an active main control board and a standby main control board. There may be one or more interface boards. A communication apparatus having a stronger data processing capability provides more interface boards. In a case of a plurality of interface boards, the plurality of interface boards may communicate with each other through one or more switch fabric units, and load sharing and redundancy backup may be jointly implemented by the plurality of interface boards. In a centralized forwarding architecture, the communication apparatus may not need the switching board, and the interface board provides a function of processing service data in an entire system. In a distributed forwarding architecture, the communication apparatus includes a plurality of interface boards, and data exchange between the plurality of interface boards may be implemented through a switching board, to provide large-capacity data exchange and processing capabilities. Therefore, the data access and processing capabilities of the communication apparatus in the distributed architecture are higher than those of a communication apparatus in a centralized architecture. A specific architecture to be used depends on a networking deployment scenario, and is not limited herein.

In a specific implementation, the memory 2832 and/or the memory 2842 are/is a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only Memory, CD-ROM) or another compact disc storage, optical disc storage (including a compressed optical disc, a laser disc, an optical disc, a digital versatile optical disc, a Blu-ray disc, and the like), a magnetic disk or another magnetic storage device, or any other medium that can be used to carry or store expected program code in a form of instructions or a data structure and that can be accessed by a computer. However, the memory 2832 and/or the memory 2842 are/is not limited thereto. The memory 2832 may exist independently, and is connected to the processor 2831 through a communication bus, or may be integrated with the processor 2831. The memory 2842 may exist independently, and is connected to the processor 2841 through a communication bus, or may be integrated with the processor 2841.

The memory 2832 is configured to store program code, and the processor 2831 controls execution of the program code, to perform some or all steps of the network interconnection method provided in the foregoing embodiments. The processor 2831 is configured to execute the program code stored in the memory 2832. The program code may include one or more software modules. The one or more software modules may be at least one functional module provided in the embodiment shown in FIG. 27. The memory 2842 may also be configured to store program code, and the processor 2841 controls execution of the program code, to perform some or all steps of the network interconnection method provided in the foregoing embodiments. Similarly, the memory 2814 may also be configured to store program code, and the central processing unit 2812 controls execution of the program code, to perform some or all steps of the network interconnection method provided in the foregoing embodiments.

In a specific implementation, the network interface 2833 and the network interface 2843 are apparatuses such as a transceiver, and are used for communication between the communication apparatus 2800 and another device or network. The network is, for example, the Ethernet, a radio access network (radio access network, RAN), a wireless local area network (wireless local area network, WLAN), an SD-WAN branch network, or a backbone network.

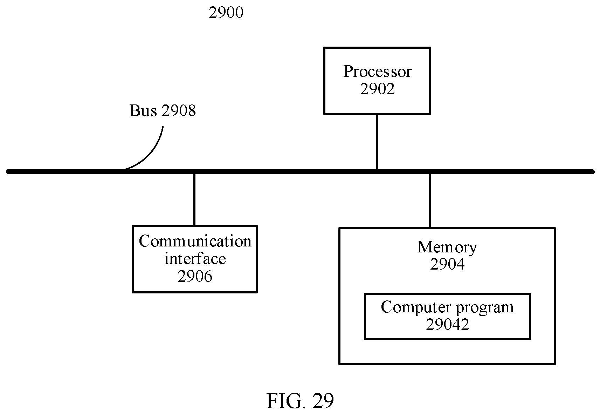

In another example, FIG. 29 is a diagram of a communication apparatus 2900 according to an embodiment of this application. The communication apparatus 2900 may be a network node or a functional component in the network node, or may be a controller or a functional component in the controller. The network node may be a switch, a router, or the like. The communication apparatus 2900 may implement the method embodiment shown in FIG. 8, FIG. 21, or FIG. 22.

As shown in FIG. 29, the communication apparatus 2900 includes a processor 2902, a memory 2904, a communication interface 2906, and a bus 2908. The processor 2902, the memory 2904, and the communication interface 2906 are communicatively connected through the bus 2908. A connection manner between the processor 2902, the memory 2904, and the communication interface 2906 shown in FIG. 29 is merely an example. In an implementation process, the processor 2902, the memory 2904, and the communication interface 2906 may alternatively be connected in a connection manner other than the bus 2908. This is not limited in embodiments of this application.

In a specific implementation, the memory 2904 is configured to store a computer program 29042, and the computer program 29042 may include instructions and data. The memory 2904 may be various types of storage media, for example, a RAM, a ROM, a non-volatile RAM (non-volatile RAM, NVRAM), a programmable ROM (programmable ROM, PROM), an erasable PROM (erasable PROM, EPROM), an electrically erasable PROM (electrically erasable PROM, EEPROM), a flash memory, an optical memory, and a register.

In a specific implementation, the processor 2902 may be a general-purpose processor or a dedicated processor. The general-purpose processor is a processor that performs a specific step and/or operation by reading and executing a computer program (for example, the computer program 29042) stored in a memory (for example, the memory 2904). In a process of performing the step and/or operation, the general-purpose processor may use data stored in the memory (for example, the memory 2904). The stored computer program may be executed to implement a related function of the processing module 2720, and the general-purpose processor may be a CPU. The dedicated processor is a processor specially designed to perform a specific step and/or operation. The dedicated processor may be a digital signal processor (digital signal processor, DSP), an ASIC, an FPGA, or the like. The processor 2902 may alternatively be a combination of a plurality of processors, for example, a multi-core processor. The processor 2902 includes at least one circuit to perform all or some steps of the foregoing method embodiments.

The communication interface 2906 includes an input/output (input/output, I/O) interface, a physical interface, a logical interface, and the like that are used to implement interconnection between components in the communication apparatus 2900, and an interface that is used to implement interconnection between the communication apparatus 2900 and another device (for example, a network device or a controller). The physical interface may be a GE interface, which is used to implement interconnection between the communication apparatus 2900 and another device. The logical interface is an internal interface of the communication apparatus 2900, which is used to implement interconnection between components in the communication apparatus 2900. The communication interface 2906 may be configured to communicate with another device through the communication apparatus 2900, and the communication interface 2906 may implement related functions of the receiving module 2710 and the sending module 2730. The communication interface 2906 may further include a transceiver for receiving and sending. The transceiver may also implement related functions of the receiving module 2710 and the sending module 2730.

The bus 2908 is any type of communication bus configured to implement interconnection between the processor 2902, the memory 2904, and the communication interface 2906. For example, the bus 2908 may be a peripheral component interconnect (peripheral component interconnect, PCI) bus, an extended industry standard architecture (extended industry standard architecture, EISA) bus, and or the like. The bus 2908 may be classified into an address bus, a data bus, a control bus, and the like. For ease of representation, only one thick line is used in FIG. 29 for representation, but it does not indicate that there is only one bus or only one type of bus.

The foregoing components in the communication apparatus 2900 may be separately disposed on chips that are independent of each other, or at least some or all of the components may be disposed on a same chip. Whether the devices are separately disposed on different chips or integrated and disposed on one or more chips usually depends on a requirement of a product design. Embodiments of this application impose no limitation on specific implementations of the foregoing components.

The communication apparatus 2900 shown in FIG. 29 is merely an example. In an implementation process, the communication apparatus 2900 may further include other components, which are not listed one by one in this specification. The communication apparatus 2900 shown in FIG. 29 implements network interconnection between different administrative domains by performing all or some steps of the network interconnection method provided in the foregoing embodiments.

Based on a same inventive concept, an embodiment of this application provides a communication system. The communication system includes a plurality of communication apparatuses. At least one of the plurality of communication apparatuses is configured to perform the method embodiment shown in FIG. 8, FIG. 21, or FIG. 22. The plurality of communication apparatuses include the communication apparatus shown in any one of FIG. 27 to FIG. 29. In a specific embodiment, the plurality of communication apparatuses include a first communication apparatus, a second communication apparatus, a third communication apparatus, and a control apparatus. The third communication apparatus is configured to perform steps S803 to S807 in the method embodiment shown in FIG. 8, FIG. 21, or FIG. 22. The first communication apparatus or the control apparatus is configured to perform steps S801 and S802 in the method embodiment shown in FIG. 8, FIG. 21, or FIG. 22. The first communication apparatus is further configured to perform steps S808 and S809 in the method embodiment shown in FIG. 22.

In a specific embodiment, the communication system is shown in FIG. 6 or FIG. 7. The first communication apparatus is the network node 1 or a communication entity in the network node 1, the second communication apparatus is the network node 6 or a communication entity in the network node 6, the third communication apparatus is the network node 7 or a communication entity in the network node 7, and the control apparatus is the controller 10 or a communication entity in the controller 10.

The communication entity includes a chip, an interface board, a line card, a software-based communication apparatus, or the like. For example, the communication apparatus includes a chip, where the chip includes a programmable logic circuit and/or program instructions, and when the chip runs, all or some of the steps of the method provided in the foregoing method embodiments are implemented.

Based on a same inventive concept, an embodiment of this application provides a computer-readable storage medium. The computer-readable storage medium stores a computer program. When the computer program is executed (for example, executed by a communication apparatus or one or more processors), all or some of the steps of the method provided in the foregoing method embodiments are implemented.

Based on a same inventive concept, an embodiment of this application provides a computer program product. The computer program product includes a program or code. When the program or the code is executed (for example, executed by a communication apparatus or one or more processors), all or some of the steps of the method provided in the foregoing method embodiments are implemented.

All or some of the foregoing embodiments may be implemented by using software, hardware, firmware, or any combination thereof. When the foregoing embodiments are implemented by using the software, all or a part of the foregoing embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage apparatus, such as a server or a data center, integrating one or more usable media. The usable medium may be a magnetic medium (for example, a floppy disk, a hard disk, or a magnetic tape), an optical medium, a semiconductor medium (for example, a solid-state drive), or the like.

It should be understood that in this application, the term "at least one" means one or more, and the term "a plurality of" means two or more than two. In this application, unless otherwise specified, the symbol "/" usually represents "or". For example, A/B represents A or B. The term "and/or" in this application describes only an association relationship for describing associated objects and represents that three relationships may exist. For example, A and/or B may represent the following three cases: Only A exists, both A and B exist, and only B exists. In addition, for ease of clear description, in this application, the words such as "first", "second", and "third" are used to distinguish between same items or similar items whose functions and purposes are basically the same. A person skilled in the art may understand that the words such as "first", "second", and "third" do not limit a quantity and an execution sequence.

Different types of embodiments such as the method embodiments and the apparatus embodiments provided in embodiments of this application may be mutually referenced. A sequence of the operations in the method embodiments can be properly adjusted, and the operations can be correspondingly added or deleted based on a situation. Any variation method that can be easily figured out by a person skilled in the art within the technical scope disclosed in this application shall fall within the protection scope of this application. Therefore, details are not described again.

In the corresponding embodiments provided in this application, it should be understood that the disclosed apparatus and the like may be implemented in other composition manners. For example, the apparatus embodiments described above are merely examples. For example, division of modules is merely division of logical functions and there may be other division manners in actual application. For example, a plurality of units or components may be combined or may be integrated to another system, or some features may be ignored or not executed. In addition, the displayed or discussed mutual couplings or direct couplings or communication connections may be implemented through some interfaces. The indirect couplings or communication connections between the apparatuses or modules may be implemented in electronic or other forms. The modules described as separate parts may or may not be physically separate, and the parts described as modules may or may not be physical modules, may be located at one location, or may be distributed on a plurality of network nodes. Some or all the modules may be selected based on an actual requirement to achieve the objectives of the solutions of embodiments.

The foregoing descriptions are merely example implementations of this application, but are not intended to limit the protection scope of this application. Any equivalent modification or replacement readily conceived by a person skilled in the art within the technical scope disclosed in this application shall fall within the protection scope of this application. Therefore, the protection scope of this application shall be subject to the protection scope of the claims.

## Claims

1. A network interconnection method, wherein the method comprises:
receiving a first tunnel identifier, wherein the first tunnel identifier identifies a first tunnel from a first communication apparatus to a second communication apparatus, a head node of the first tunnel is the first communication apparatus, and a tail node of the first tunnel is the second communication apparatus; and
establishing an end-to-end tunnel from a third communication apparatus to the second communication apparatus based on the first tunnel identifier, wherein the end-to-end tunnel comprises the first tunnel and a second tunnel, a head node of the second tunnel is the third communication apparatus, and a tail node of the second tunnel is the first communication apparatus.

2. The method according to claim 1, wherein the establishing the end-to-end tunnel from the third communication apparatus to the second communication apparatus based on the first tunnel identifier comprises:
determining, based on the first tunnel identifier and performance information of the first tunnel, to establish the end-to-end tunnel based on the first tunnel.

3. The method according to claim 2, wherein the method further comprises:
receiving the performance information of the first tunnel.

4. The method according to any one of claims 1 to 3, wherein the establishing the end-to-end tunnel from the third communication apparatus to the second communication apparatus based on the first tunnel identifier comprises:
establishing the end-to-end tunnel based on the first tunnel identifier and a second tunnel identifier, wherein the second tunnel identifier identifies the second tunnel.

5. The method according to claim 4, wherein the method further comprises:
receiving the second tunnel identifier.

6. The method according to any one of claims 1 to 5, wherein the receiving the first tunnel identifier comprises:
receiving a plurality of tunnel identifiers, wherein the plurality of tunnel identifiers comprise the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus.

7. The method according to any one of claims 1 to 6, wherein the method further comprises:
receiving a virtual private network VPN route, wherein a next hop address of the VPN route is an address of the second communication apparatus; and
recursing the VPN route to the end-to-end tunnel based on the next hop address of the VPN route.

8. The method according to any one of claims 1 to 7, wherein the receiving the first tunnel identifier comprises: receiving a first route, wherein the first route comprises the first tunnel identifier, an identifier of the head node of the first tunnel, and an identifier of the tail node of the first tunnel.

9. The method according to any one of claims 1 to 8, wherein the method further comprises:
sending a first packet to the second communication apparatus through the end-to-end tunnel, wherein the first packet comprises the first tunnel identifier.

10. The method according to any one of claims 1 to 9, wherein
the method is performed by the third communication apparatus.

11. A network interconnection method, wherein the method comprises:
obtaining a first tunnel identifier, wherein the first tunnel identifier identifies a first tunnel from a first communication apparatus to a second communication apparatus, a head node of the first tunnel is the first communication apparatus, and a tail node of the first tunnel is the second communication apparatus; and
sending the first tunnel identifier to a third communication apparatus, so that the third communication apparatus establishes an end-to-end tunnel from the third communication apparatus to the second communication apparatus based on the first tunnel identifier, wherein the end-to-end tunnel comprises the first tunnel and a second tunnel, a head node of the second tunnel is the third communication apparatus, and a tail node of the second tunnel is the first communication apparatus.

12. The method according to claim 11, wherein the method further comprises:
sending performance information of the first tunnel to the third communication apparatus.

13. The method according to claim 11 or 12, wherein the method further comprises:
sending a second tunnel identifier to the third communication apparatus, wherein the second tunnel identifier identifies the second tunnel.

14. The method according to any one of claims 11 to 13, wherein the obtaining the first tunnel identifier comprises:
obtaining a plurality of tunnel identifiers, wherein the plurality of tunnel identifiers comprise the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus;
determining the first tunnel based on the performance information of the first tunnel and performance information of the third tunnel; and
obtaining the first tunnel identifier that identifies the first tunnel.

15. The method according to any one of claims 11 to 13, wherein
the obtaining the first tunnel identifier comprises: obtaining a plurality of tunnel identifiers, wherein the plurality of tunnel identifiers comprise the first tunnel identifier and a third tunnel identifier, the third tunnel identifier identifies a third tunnel from the first communication apparatus to the second communication apparatus, a head node of the third tunnel is the first communication apparatus, and a tail node of the third tunnel is the second communication apparatus; and
the sending the first tunnel identifier to the third communication apparatus comprises: sending the plurality of tunnel identifiers to the third communication apparatus.

16. The method according to any one of claims 11 to 15, wherein the sending the first tunnel identifier to the third communication apparatus comprises:
sending a first route to the third communication apparatus, wherein the first route comprises the first tunnel identifier, an identifier of the head node of the first tunnel, and an identifier of the tail node of the first tunnel.

17. The method according to any one of claims 11 to 16, wherein the method is performed by the first communication apparatus, and the method further comprises:
receiving a first packet, wherein the first packet comprises the first tunnel identifier; and
forwarding the first packet to the second communication apparatus based on the first tunnel identifier.

18. The method according to any one of claims 11 to 16, wherein
the method is performed by a controller or the first communication apparatus.

19. The method according to any one of claims 2, 3, 12, and 14, wherein
the performance information comprises at least one of available bandwidth, delay, jitter, or packet loss.

20. The method according to claim 8 or 16, wherein the first route comprises any one of the following:
a software-defined networking in a wide area network SD-WAN route;
a border gateway protocol link-state BGP-LS route;
a border gateway protocol BGP labeled route;
a border gateway protocol flow specification BGP FS route;
a border gateway protocol routing policy distribution BGP-RPD route;
an overlay management protocol OMP route; or
a path computation element communication protocol PCEP route.

21. The method according to any one of claims 8, 16, and 20, wherein
the first route is the BGP FS route, the OMP route, or the PCEP route, the first route comprises a traffic control policy, and the traffic control policy comprises the first tunnel identifier; or
the first route is the BGP-RPD route, the OMP route, or the PCEP route, the first route comprises a routing control policy, and the routing control policy comprises the first tunnel identifier; or
the first route is the SD-WAN route or the BGP-LS route, the first route comprises a multiprotocol reachable network layer reachability information MP_REACH_NLRI attribute, and the MP_REACH_NLRI attribute comprises the first tunnel identifier; or
the first route is the BGP labeled route, the first route comprises an MP_REACH_NLRI attribute or a border gateway protocol prefix segment identifier BGP prefix-SID attribute, and the MP_REACH_NLRI attribute or the BGP prefix-SID attribute comprises the first tunnel identifier.

22. The method according to any one of claims 1 to 21, wherein
the second tunnel comprises a software-defined networking in a wide area network SD-WAN tunnel.

23. The method according to any one of claims 1 to 22, wherein
the first tunnel belongs to a first administrative domain, and the second tunnel belongs to a second administrative domain.

24. The method according to any one of claims 1 to 23, wherein the first tunnel comprises any one of the following:
a segment routing multiprotocol label switching SR-MPLS tunnel;
a segment routing internet protocol version 6 SRv6 traffic engineering TE tunnel;
a generic routing encapsulation GRE tunnel;
a multiprotocol label switching MPLS label distribution protocol LDP label switching path LSP tunnel;
a border gateway protocol BGP label switching path LSP tunnel; or
a resource reservation protocol traffic engineering RSVP-TE label switching path LSP tunnel.

25. A communication apparatus, wherein the communication apparatus comprises at least one functional module, wherein
the at least one functional module is configured to perform the method according to any one of claims 1 to 24.

26. A communication apparatus, comprising a memory and a processor, wherein
the memory is configured to store a computer program; and
the processor is configured to execute the computer program stored in the memory to implement the method according to any one of claims 1 to 24.

27. A communication system, comprising a plurality of communication apparatuses, wherein
at least one of the plurality of communication apparatuses is configured to perform the method according to any one of claims 1 to 24.

28. A computer-readable storage medium, wherein the computer-readable storage medium stores a computer program, and when the computer program is executed by a processor, the method according to any one of claims 1 to 24 is implemented.

29. A computer program product, comprising a program or code, wherein when the program or the code is executed by a processor, the method according to any one of claims 1 to 24 is implemented.
